(19) **Europäisches Patentamt / European Patent Office / Office européen des brevets**

(11) **EP 3 521 458 B1**

(12) # EUROPEAN PATENT SPECIFICATION

(45) Date of publication and mention
of the grant of the patent:
**19.01.2022 Bulletin 2022/03**

(21) Application number: **17855735.1**

(22) Date of filing: **13.09.2017**

(51) International Patent Classification (IPC):
*C21D 9/00* (2006.01)    *B23K 9/04* (2006.01)
*B23K 35/30* (2006.01)    *C21D 1/18* (2006.01)
*C22C 38/00* (2006.01)    *C22C 38/14* (2006.01)
*C22C 38/58* (2006.01)    *C21D 9/46* (2006.01)
*C21D 9/50* (2006.01)    *C21D 1/673* (2006.01)

(52) Cooperative Patent Classification (CPC):
**C21D 9/50; B21D 22/20; B23K 9/04; B23K 31/00;
B23K 35/30; C21D 1/18; C21D 1/673; C21D 6/004;
C21D 6/005; C21D 6/007; C21D 6/008; C21D 9/00;
C22C 38/00; C22C 38/001; C22C 38/002;**    (Cont.)

(86) International application number:
**PCT/JP2017/033104**

(87) International publication number:
**WO 2018/061779 (05.04.2018 Gazette 2018/14)**

(54) **STEEL PARTS, PRODUCTION METHOD THEREFOR, AND STEEL SHEET FOR STEEL PARTS**

STAHLTEILE, HERSTELLUNGSVERFAHREN DAFÜR UND STAHLBLECH FÜR STAHLTEILE

PIÈCES EN ACIER, PROCÉDÉ DE PRODUCTION ASSOCIÉ, ET TÔLE D'ACIER DESTINÉE À DES PIÈCES EN ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2016 JP 2016194638**

(43) Date of publication of application:
**07.08.2019 Bulletin 2019/32**

(73) Proprietor: **Kabushiki Kaisha Kobe Seiko Sho
(Kobe Steel, Ltd.)
Kobe-shi, Hyogo 651-8585 (JP)**

(72) Inventors:
• **KIMURA, Takayuki
  HYogo 651-2271 (JP)**
• **SUZUKI, Reiichi
  Kanagawa 251-8551 (JP)**
• **KATSUMA, Hideto
  Hyogo 651-2271 (JP)**
• **WATANABE, Kenichi
  Hyogo 651-2271 (JP)**

• **CHEN, Liang
  Kanagawa 251-8551 (JP)**

(74) Representative: **Müller-Boré & Partner
Patentanwälte PartG mbB
Friedenheimer Brücke 21
80639 München (DE)**

(56) References cited:
**EP-A1- 2 617 509     EP-A1- 2 824 204
WO-A1-2015/190574     WO-A1-2017/103127
JP-A- H04 232 737     JP-A- 2007 197 810
JP-A- 2008 000 763     JP-A- 2012 219 682**

**(Cont. next page)**

(52) Cooperative Patent Classification (CPC): (Cont.)
**C22C 38/02; C22C 38/06; C22C 38/14;**
**C22C 38/30; C22C 38/38; C22C 38/44;**
**C22C 38/50; C22C 38/54; C22C 38/58;**
**C22C 38/60;** C21D 9/46; C21D 2211/008;
C21D 2251/04

**EP 3 521 458 B1**

**Description**

The present disclosure relates to steel part and a production method therefor, and a built-up steel sheet for steel part.

Automobile frame parts are required to achieve both high shock resistance and high shock absorbing properties in order to protect passengers in automobile collision. Especially, a front side member disposed on the front of the automobile and a B pillar disposed on the side of the automobile are made of a steel material that has high strength in order to improve the shock resistance and also has high ductility in order to further improve the shock absorbing properties.

The B pillar disposed on the side of the automobile is strongly required to prevent head injury of passengers in collision from the side. Therefore, the strength of the portion in the vicinity of the head of passengers of the B pillar (upper portion of the B pillar) is particularly increased to suppress deformation, and the strength of the portion in the vicinity of the feet of passengers of the B pillar (lower portion of the B pillar) is decreased to make it easy to deform in order to enables absorption of collision energy. In this way, various partial strengthening techniques have been put to practical use in order to differentiate the strength in one part.

For example, there has been known a method in which a built-up portion is partially formed with a welding wire on the part to partially improve the strength of the part (e.g., Patent Documents 1 and 2). Strengthening by the built-up portion is advantageous in view of high degree of freedom since an optional position of the part can be strengthened. Patent Document 1 discloses a technique of forming a built-up portion (built-up weld beads) along a bend ridge portion of a frame along the load input direction in order to improve the strength or rigidity of the frame. Patent Document 2 discloses a technique of continuously or intermittently forming a built-up portion along a ridge line forming direction in a ridge line of a bending member or in the vicinity thereof in order to increase the strength after bending. Patent Document 3 discloses a molded member and a manufacturing method thereof. Patent Document 4 discloses a steel sheet for hot pressing use, a press-molded article, and a method for producing press-molded article. Patent Document 5 discloses a method for manufacturing reinforced steel structural components.

Patent Document 1: JP 5002880 B1
Patent Document 2: JP 2004-276031 A
Patent Document 3: EP 2 617 509 A1
Patent Document 4: EP 2 824 204 A1
Patent Document 5: WO 2017/103127 A1

To reduce the body weight of the automobile, it is preferable to use a steel sheet having a high strength as possible. However, in general, the higher, the strength of a steel material, the lesser the ductility is. Therefore, it has been considered that a high-strength steel sheet capable of obtaining sufficient ductility, for example, a steel sheet having the strength of 780 MPa grade at most can be applied and a steel sheet having the strength higher than that of the steel sheet cannot be applied, in the front side member and the lower portion of the B pillar that are required to have shock absorbing properties.

In recent years, a study on the improvement of the ductility of a high-strength steel sheet have progressed, and there has been developed an ultrahigh-strength steel sheet that has excellent ductility capable of being applied to shock absorbing parts such as a front side member and a lower part of the B pillar, and also has the strength higher than that of a 780 MPa grade steel sheet (e.g., 980 MPa grade steel sheet, 1,180 MPa grade steel sheet). Use of such ultrahigh-strength steel sheet enables realization of further reduction of the body weight of the automobile.

When the front side member is formed from the ultrahigh-strength steel sheet, it is preferable to provide a built-up portion by arc build-up welding along the load input direction (longitudinal direction of the front side member). When the B pillar is formed from the ultrahigh-strength steel sheet, it is preferable to provide a built-up portion on the upper portion of the B pillar. By providing the built-up portion, the strength can be partially increased to make it difficult to deform (i.e., deformation is suppressed).

The built-up portion is formed by welding a welding wire on the surface of the steel sheet by arc welding or the like. Therefore, a heat affected zone (HAZ) is formed in the vicinity of the built-up portion during welding. Generally, the strength of HAZ is lower than that of the steel sheet. Therefore, when a steel part provided with the built-up portion is shocked, HAZ having low strength tends to act as an origin of cracks. Especially, the steel part using the ultra-high strength steel sheet exhibits too low strength of the HAZ in spite of extremely high strength of the steel sheet, so that there is more notable problem of cracks originating from HAZ.

In the steel part disclosed in Patent Documents 1 and 2, no consideration is given to the problem of the reduction in strength due to HAZ and the problems of cracks originating from HAZ.

Thus, an object of an embodiment of the present invention is to provide a steel part capable of suppressing cracks originating from HAZ, and a production method therefor. Furthermore, an object of another embodiment of the present invention is to provide a built-up steel sheet that is suitable for the production of the steel part.

These objects are achieved by the features of claims 3, 1 and 7 respectively.

Aspect 1 of the present invention provides a method for producing a steel part, which includes the steps of:

preparing a built-up steel sheet including a steel sheet including:

C: 0.15 to 0.5% by mass,
Si: 0.10 to 3% by mass,
Mn: 0.5 to 5% by mass,
P: 0.05% by mass or less (excluding 0%),
S: 0.05% by mass or less (excluding 0%),
Al: 0.01 to 1% by mass,
B: 0.0002 to 0.01% by mass,
Ti: 0.005 to (3.4[N] + 0.1) % by mass (in which [N] represents a content of N (% by mass)), and
N: 0.001 to 0.01% by mass, and optionally

any one or more of:

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and
(d) 0.01% by mass or less (excluding 0%) in total of one or more of Mg, Ca and REM, with the balance being iron and inevitable impurities, and one or more built-up portions provided on the steel sheet;

hot-forming the built-up steel sheet at a temperature of an Ac3 point or higher of the steel sheet; and
cooling the hot-formed built-up steel sheet to a temperature of an Ms point or lower of the steel sheet such that an area ratio of martensite in a metal structure of the steel sheet is 70% or more,
wherein the step of preparing a built-up steel sheet includes:

preparing the steel sheet, and
welding a welding wire on the steel sheet to form the built-up portions, and
wherein the welding wire includes:

C: 0.10 to 1.00% by mass,
Si: 0.2 to 1.20% by mass,
Mn: 1.0 to 20.0% by mass,
Cr: 1.0 to 30.0% by mass, and
Mo: 0.30 to 1.00% by mass, and optionally

any one or more of:

Ni: 3.00% by mass or less (excluding 0%),
Ti: 0.20% by mass or less (excluding 0%),
Cu: 0.50% by mass or less (excluding 0%),
S: 0.020% by mass or less (excluding 0%),
Co: 1.00% by mass or less (excluding 0%),
V: 1.00% by mass or less (excluding 0%),
W: 2.00% by mass or less (excluding 0%), and
B: 0.020% by mass or less (excluding 0%),
with the balance being iron and inevitable impurities.

Aspect 2 of the present invention provides the method for producing a steel part according to aspect 3, in which the C content, the Mn content and the Cr content of the welding wire are respectively as follows:

C: 0.10 to 0.50% by mass,
Mn: 1.0 to 5.0% by mass, and
Cr: 1.0 to 5.0% by mass.

Aspect 3 of the present invention provides a steel part including:

a steel sheet;
one or more built-up portions provided on the steel sheet; and
a heat affected zone provided between the built-up portions and the steel sheet;
in which the steel sheet has the composition including:

C: 0.15 to 0.5% by mass,
Si: 0.10 to 3% by mass,
Mn: 0.5 to 5% by mass,
P: 0.05% by mass or less (excluding 0%),
S: 0.05% by mass or less (excluding 0%),
Al: 0.01 to 1% by mass,
B: 0.0002 to 0.01% by mass,
Ti: 0.005 to (3.4[N] + 0.1) % by mass (in which [N] represents a content of N (% by mass)), and
N: 0.001 to 0.01% by mass, and optionally

any one or more of

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and
(d) 0.01% by mass or less (excluding 0%) in total of one or more of Mg, Ca and REM,

with the balance being iron and inevitable purities,
the steel sheet has a metal structure in which martensite has an area ratio of 70% or more, and
the heat affected zone has a hardness of Hv300 or higher.

Aspect 4 of the present invention provides the steel part according to aspect 3, in which the built-up portions have a hardness of Hv300 or higher.

Aspect 5 of the present invention provides the steel part according to aspect 3 or 4, in which the built-up portions include:

C: 0.10 to 1.00% by mass,
Si: 0.2 to 1.20% by mass,
Mn: 1.0 to 20.0% by mass,
Cr: 1.0 to 30.0% by mass, and
Mo: 0.30 to 1.00% by mass, and optionally

any one or more of:

Ni: 3.00% by mass or less (excluding 0%),
Ti: 0.20% by mass or less (excluding 0%),
Cu: 0.50% by mass or less (excluding 0%),
S: 0.020% by mass or less (excluding 0%),
Co: 1.00% by mass or less (excluding 0%),
V: 1.00% by mass or less (excluding 0%),
W: 2.00% by mass or less (excluding 0%), and
B: 0.020% by mass or less (excluding 0%)
with the balance being iron and inevitable impurities.

Aspect 6 of the present invention provides the steel part according to aspect 5, in which the C content, the Mn content and the Cr content of the built-up portions are respectively as follows:

C: 0.10 to 0.50% by mass,
Mn: 1.0 to 5.0% by mass, and
Cr: 1.0 to 5.0% by mass.

Aspect 7 of the present invention provides a built-up steel sheet used in the method for producing a steel part according to aspect 1, including:

a steel sheet including:

C: 0.15 to 0.5% by mass,
Si: 0.10 to 3% by mass,
Mn: 0.5 to 5% by mass,
P: 0.05% by mass or less (excluding 0%),
S: 0.05% by mass or less (excluding 0%),
Al: 0.01 to 1% by mass,
B: 0.0002 to 0.01% by mass,
Ti: 0.005 to (3.4[N] + 0.1) % by mass (in which [N] represents a content of N (% by mass)), and
N: 0.001 to 0.01% by mass, and optionally

any one or more of:

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and
(d) 0.01% by mass or less (excluding 0%) in total of one or more of Mg, Ca and REM,

with the balance being iron and inevitable impurities;
one or more built-up portions provided on the steel sheet; and
a heat affected zone provided between the built-up portions and the steel sheet;
in which the heat affected zone has a hardness of lower than Hv300.

According to the method for producing a steel part of an embodiment of the present invention, the heat affected zone (HAZ) in the steel part is subjected to a heat treatment during hot forming, thus enabling an improvement in the strength of HAZ. This makes it possible to suppress cracks originating from HAZ in the thus obtained steel part. The built-up steel sheet according to another embodiment of the present invention can be used when the steel part according to an embodiment of the present invention is produced.
FIG. 1 is a schematic cross-sectional view of a steel part according to the embodiment.
FIG. 2A is a schematic top view of a built-up steel sheet used for the measurement.
FIG. 2B is a schematic side view for explaining the measurement of thermal strain.
FIG. 3A is a schematic cross-sectional view, taken along line C-C of FIG. 2A, for explaining the measurement of a hardness.
FIG. 3B is a schematic cross-sectional view for explaining the measurement of a hardness.
FIG. 4A is a schematic top view of a built-up steel sheet used in a bending crash test.
FIG. 4B is a schematic side view of a specimen for a bending crash test.
FIG. 4C is a schematic front view for explaining a bending crash test.

When the built-up portion is formed on the surface of a steel sheet by arc welding or the like, HAZ is formed between the steel sheet and the built-up portion. In HAZ, the metal structure changes due to the influence of heat (e.g., grain coarsening occurs), thus reducing the strength.
In the method for producing a steel part according to the present embodiment, the built-up portion is formed on the steel sheet, followed by subjecting to hot forming. By heating and cooling during this hot forming, HAZ is heat-treated. In this heat treatment, the heat treatment conditions are controlled such that an area ratio of martensite in the steel sheet is 70% or more. Therefore, in this heat treatment, the conditions of the heat treatment are controlled such that a large amount of martensite (e.g., martensite having an area ratio of 70% or more like the steel sheet) is formed in the metal structure in HAZ. As a result, the strength of the HAZ is improved, thus making it possible to obtain the strength equivalent to that of the steel sheet. In other words, since the difference in strength between the steel sheet and HAZ can be reduced, thus making it possible to suppress cracks originating from HAZ.
When HAZ is appropriately heat-treated, not only the strength of HAZ but also the hardness of HAZ increases. The inventors of the present application have found that cracks originating from HAZ can be suppressed when the hardness of HAZ after the heat treatment is Hv300 or higher in the steel part using an ultrahigh-strength steel sheet.

In the method for producing a steel part according to the embodiment of the present invention, strain of the part can be suppressed for the following reasons.

The built-up portion on the surface of the steel sheet is formed by melting a welding wire to place the molten welding wire on the surface of the steel sheet, and cooling to solidify the molten metal. Since heat shrinkage occurs when the molten metal is solidified, tensile stress is applied to the surface side of the steel sheet on which the built-up portion is provided. As a result, the built-up steel sheet thus obtained may be warped largely as a whole. Therefore, as mentioned in Patent Documents 1 and 2, when the steel sheet is first hot-formed and then the built-up portion is formed to form a steel part, the thus obtained part might be warped, thus making it hard to ensure the dimensional accuracy of the part.

A shock absorbing part such as a front side member is designed such that the load input direction is the longitudinal direction of the front side member. However, formation of the built-up portion after hot forming might cause warpage of the front side member, leading to sifting of the longitudinal direction of the front side member from the load input direction. In that case, there is a possibility that the obtained front side member cannot achieve collision performance at the time of design.

In the method for producing a steel part according to the embodiment of the present invention, since the built-up portion is formed on the steel sheet, followed by subjecting to hot forming, warpage can be eliminated even if warpage occurs during the formation of the built-up portion. Therefore, it is possible to prevent parts such as a front side member from causing degradation of performance due to warpage.

A steel part according to the embodiment of the present invention, and a production method therefor will be described in detail below.

1. Steel Part

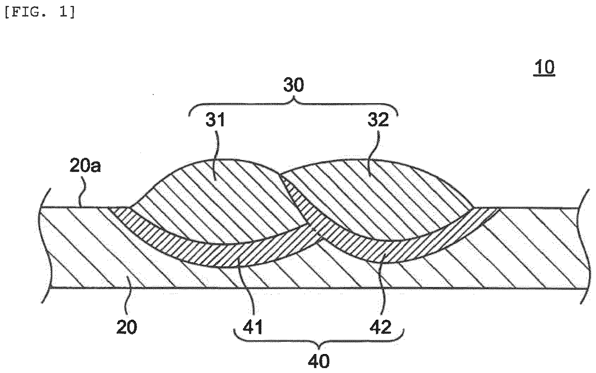

As shown in FIG. 1, a steel part 10 according to the present embodiment includes a steel sheet 20, a built-up portion 30 provided at a predetermined position on a surface 20a of the steel sheet 20, and a heat affected zone 40 provided between the built-up portion 30 and the steel sheet 20. In the example of FIG. 1, the built-up portion 30 includes a first built-up portion 31 and a second built-up portion 32 that partially overlaps with the first built-up portion 31. Two built-up portions 31 and 32 overlapping with each other are obtained by sequentially forming the first built-up portion 31 and forming the second built-up portion 32 (two-pass bead welding method). By forming the built-up portion 30, the thickness of the steel part partially increases, thus enabling partial improvement in strength of the steel part. In other words, the built-up portion has a reinforcing function of partially reinforcing the steel part.

In the present embodiment, a description is made by exemplifying a steel part 10 including two built-up portions 30. However, in the embodiment of the present invention, the number of the built-up portions 30 can be arbitrarily changed. For example, the embodiment of the present invention includes a steel part 10 including one built-up portion. The embodiment of the present invention also includes a steel part 10 including more (e.g., three or more) built-up portions 30 in order to further increase the strength.

In the present embodiment, a form of two built-up portions partially overlapping with each other was exemplified. However, in the embodiment of the present invention, a plurality of built-up portions may be provided without overlapping with each other. Three or more built-up portions may be provided in such a manner that two or more built-up portions partially overlap with each other, and one or more built-up portions do not overlap with each other.

In the case of a steel part including a plurality of built-up portions, all the compositions of the built-up portions may be the same or different. Especially, if all the compositions of the built-up portions are same, the built-up portions can be formed using the same welding wire, so that it is advantageous in view of the production efficiency.

In the steel part 10 of FIG. 1, the heat-affected zone 40 includes a first heat affected zone 41 formed when the first built-up portion 31 is formed and a second heat affected zone 42 formed when a second built-up portion 32 is formed.

As can be seen from FIG. 1, the first heat affected zone 41 is formed between the steel sheet 20 and the first built-up portion 31. Meanwhile, the second heat affected zone 42 is formed between the steel sheet 20 and the second built-up portion 32 and further extends to a space between the first built-up portion 31 and the second built-up portion 32. This is because, after forming the first built-up portion 31, the second built-up portion 32 was formed so as to partially overlap with the first built-up portion 31, so that the first built-up portion 31 became a heat affected zone as a result of being partially heat-affected.

The heat affected zone 40 can be confirmed by an optical microscope or the like. When a cross-section passing through the steel sheet 20, the built-up portion 30 and the heat affected zone 40 is subjected to Picral etching and then observed by the optical microscope, the heat affected zone can be easily confirmed since the steel sheet 20, the built-up portion 30 and the heat affected zone 40 differ in color and metal structure.

In the steel part 10 according to the embodiment of the present invention, the heat affected zone 40 has a hardness of Hv300 or higher. Such high hardness can be attained by further heat-treating the heat affected zone 40 formed by forming the built-up portion 30 on the steel sheet 20. The hardness of the heat affected zone 40 before the heat treatment is as low as about Hv150 to 250. In this way, when the heat affected zone 40 has high hardness, the strength of the heat affected zone 40 also increases. In other words, the strength of the heat-affected zone 40 can be improved by the heat treatment. The hardness of the heat affected zone 40 is particularly preferably Hv360 or higher.

Generally, the strength of the heat affected zone is significantly lower than that of the steel sheet. Especially, in the ultrahigh-strength steel sheet, the difference in strength between the heat affected zone and the steel sheet is particularly large as compared with an ordinary high-strength steel sheet. In the steel part, if there is large difference in strength between the heat-affected zone and the steel sheet, cracks easily occur from the heat affected zone having low strength, as origin, when stress is applied to the steel part. In the embodiment of the present invention, since the strength of the heat-affected zone 40 is improved, thus making it possible to reduce the difference in strength between the steel sheet 20 and the heat affected zone 40, it is possible to suppress cracking originating from the heat affected zone 40.

The surface of the steel part may be covered with a plating layer. It is possible to apply, as the plating layer, a plating layer that is usually performed on a steel sheet. Specifically, examples of the suitable plating layer include a hot-dip galvanizing layer, an electrogalvanizing layer, or an alloyed galvanizing layer.

The plating layer may be formed in a state of a built-up steel sheet or may be formed after forming a built-up steel sheet into a shape of a steel part. Especially, it is preferable to form a plating layer in a state of a built-up steel sheet since it is easy to immerse in a plating bath or the like.

A steel sheet 20 and a built-up portion 30 suitable for a steel part 10 will be described in detail below. Note that all percentages as unit with respect to the composition of the steel sheet 20 and the built-up portion 30 are by mass.

2. Composition of Steel Sheet 20

The composition of the steel sheet 20 suitable for the steel part 10 will be described. First, basic elements C, Si, Mn, P, S, Al, B, Ti and N will be described, and then elements that may be selectively added will be described.

C: 0.15 to 0.5% by mass

C is an element that is important in ensuring retained austenite in the portion with particularly low strength and high ductility, in order to achieve high level of a balance between high strength and elongation when uniform properties are required in a molded article, or in the case of requiring a region corresponding to a shock resistant site and an energy absorption site in a single molded article. During heating by hot press forming, concentration of C in austenite enables the formation of retained austenite after quenching. C also contributes to an increase in the amount of martensite, thus increasing the strength. To exert these effects, there is a need to set the C content at 0.15% or more.

However, when the C content becomes excessive and exceeds 0.5%, the strength of the steel part as a final product excessively increases. Therefore, the deformability is degraded in automotive parts, especially parts requiring the deformability during crashing. Meanwhile, if the C content exceeds 0.5%, the heating region in a two-phase region becomes narrow, so that high level of a balance between high strength and elongation cannot be achieved when uniform properties are required in the molded article, or it becomes difficult to regulate to the objective metal structure (metal structure that ensured each predetermined amount of ferrite, bainitic ferrite, and martensite) in the site with particularly low strength and high ductility in the case of requiring a region corresponding to a shock resistant site and an energy absorption site in a single molded article. The lower limit of the C content is preferably 0.17% (more preferably 0.20%), and the upper limit is more preferably 0.45% (still more preferably 0.40%).

Si: 0.10 to 3% by mass

Si exerts the effect of forming retained austenite by tempering martensite during cooling of mold quenching to form cementite, and suppressing decomposition of untransformed austenite. To exert such effect, there is a need to set the Si content at 0.1% or more. If the Si content becomes excessive and exceeds 3%, the toughness after hot forming is degraded. In addition, if the Si content exceeds 3%, since ferrite transformation is promoted during cooling after hot rolling, coarse TiC is easily formed in ferrite formed at that time, thus failing to obtain the effect of suppressing softening of HAZ. The lower limit of the Si content is preferably 0.5% (more preferably 1.0%), and the upper limit is preferably 2.5% (more preferably 2.0%).

Mn: 0.5 to 5% by mass

Mn is an element that is effective in enhancing the hardenability and suppressing the formation of structures other than martensite and retained austenite during cooling of mold quenching (ferrite, pearlite, bainite, etc.). Mn is also an element that stabilizes austenite and contributes to an increase in the amount of retained austenite. To exert such effect, there is a need to contain 0.5% or more of Mn. When only properties are taken into consideration, the higher the Mn content, the better. Since the cost increases by the addition of an alloying element, the Mn content was set at 5% or less. Meanwhile, if the Mn content exceeds 5%, the effect of adding Mn is not easily improved with respect to the additive amount, so that the Mn content was set at 5% or less from the viewpoint of the cost effectiveness. The lower limit of the Mn content is preferably 0.7% (more preferably 1.0%), and the upper limit is preferably 2.5% (more preferably 2.0%).

P: 0.05% by mass or less (excluding 0%)

P is an element inevitably contained in the steel, but degrades the ductility, so that it is preferable to reduce the content of P as much as possible. Since extreme reduction leads to an increase in steelmaking cost and it is difficult to reduce to 0% from a manufacturing point of view, the P content was set at 0.05% or less (excluding 0%). The upper limit of the P content is preferably 0.045% (more preferably 0.040%).

S: 0.05% by mass or less (excluding 0%)

Like P, S is also an element inevitably contained in the steel and degrades the ductility, so that it is preferable to reduce the content of S as much as possible. Since extreme reduction leads to an increase in steelmaking cost and it is difficult to reduce to 0% from a manufacturing point of view, the S content was set at 0.05% or less (excluding 0%). The upper limit of the S content is preferably 0.045% (more preferably 0.040%).

Al: 0.01 to 1% by mass

Al is useful as a deoxidizing element, and also fixes solid-soluted N existing in the steel as AlN and is useful for improving the ductility. To effectively exert such effect, there is a need set the Al content at 0.01% or more. However, if the Al content becomes excessive and exceeds 1%, $Al_2O_3$ is excessively formed, thus degrading the ductility. The lower limit of the Al content is preferably 0.02% (more preferably 0.03%), and the upper limit is preferably 0.8% (more preferably 0.6%).

B: 0.0002 to 0.01% by mass

B is an element that suppresses the formation of ferrite, pearlite and bainite during cooling after heating to a two-phase region temperature ($Ac_1$ transformation point to $AC_3$ transformation point) and contributes to ensuring retained austenite, because of having the effect of suppressing ferrite transformation, pearlite transformation, and bainite transformation on the high-strength region side. To exert such effect, there is a need to contain 0.0002% or more of B. However, even if B is excessively contained in the amount of more than 0.01%, the effect is saturated. The lower limit of the B content is preferably 0.0003% (more preferably 0.0005%), and the upper limit is preferably 0.008% (more preferably 0.005%).

Ti: 0.005% by mass to (3.4[N] + 0.1) % by mass ([N] is the content of N (% by mass))

Ti exerts the effect of improving the hardenability by fixing N and maintaining B in a solid solution state. To exert such effect, 0.005% or more of Ti is contained. By allowing Ti to exist in a hot-stamped article in a solid solution state and finely dispersing a precipitated compound, a reduction in strength in HAZ can be suppressed by the effect of precipitation strengthening due to the formation of Ti solid-soluted when the hot-stamped article is welded as TiC and/or the effect of delaying an increase in dislocation density due to the effect of preventing dislocation migration by TiC. However, if the Ti content becomes excessive and exceeds 0.1% of a stoichiometric ratio of Ti and N [3.4 times the content of N] (i.e., 3.4 [N] + 0.1%), the thus formed Ti-containing precipitate (e.g., TiN) is coarsened, thus degrading the ductility of the steel sheet. The lower limit of the Ti content is more preferably 3.4 [N] + 0.02% (still more preferably 3.4 [N] + 0.05%), and the upper limit is more preferably 3.4 [N] + 0.09% (still more preferably 3.4 [N] + 0.08%) .

N: 0.001 to 0.01% by mass

N is an inevitably mixed element and is preferably reduced as much as possible. However, since there is a limitation to reduction in an actual process, the lower limit of the N content was set at 0.001%. Excessive N content leads to coarsening of the thus formed Ti-containing precipitate (e.g., TiN) and this precipitate acts as an origin of fracture, thus degrading the ductility of the steel sheet, so that upper limit was set at 0.01%. The upper limit of the N content is more preferably 0.008% (still more preferably 0.006%).

When the composition of the steel sheet satisfies all of the following requirements: C: 0.15% by mass or more, Si: 0.10% by mass or more, Mn: 0.5% by mass or more, B: 0.0002% by mass or more, and Ti: 0.005% by mass or more, it is possible to control the hardness of the heat affected zone of the steel part to Hv300 or higher by subjecting to a heat treatment under appropriate heat treatment conditions.

Balance

In a preferred embodiment, the balance is composed of iron and inevitable impurities. It is permitted to mix, as inevitable impurities, trace elements (e.g., As, Sb, Sn, etc.) incorporated according to the conditions of raw materials, materials, manufacturing facilities and the like. There are elements whose content is preferably as small as possible, like P and S, that are therefore inevitable impurities in which the composition range is separately defined as mentioned above. Therefore, "inevitable impurities" constituting the balance as used herein means the concept excluding elements whose composition range is separately defined.

However, it is not limited to this embodiment. As long as properties of the high-strength steel sheet according to the embodiment of the present invention can be maintained, any other element may be further included. Other elements that can be selectively contained in such way are exemplified below.

(a) 0.001 to 0.1% or less in total of one or more of V, Nb and Zr

V, Nb and Zr have the effect of forming fine carbide to refine the structure by the pinning effect. For that purpose, it is preferable to contain 0.001% or more in total of these elements. However, excessive content of these elements leads to the formation of coarse carbide and the coarse carbide acts as an origin of fracture, thus degrading the ductility, so that the content is preferably set at 0.1% or less. The lower limit of the content of these elements is more preferably 0.005% (still more preferably 0.008%) in total, and the upper limit is more preferably 0.08% (still more preferably 0.06%) in total.

(b) 0.01 to 2% in total of Cr and/or Mo

Cr and Mo are elements that are effective in improving the hardenability of the steel sheet. By containing these elements, it is expected to reduce a variation in hardness of a molded article. For that purpose, it is preferable to contain 0.01% or more (in total) of one or more. However, if the content exceeds 2%, the effect is saturated, thus causing an increase in cost. Therefore, the total content of these elements is preferably set at 2% or less (more preferably 1% or less).

(c) 0.01 to 0.5% in total of Ni and/or Cu

Ni and Cu are added when it is desired to impart corrosion resistance and delayed fracture resistance to a molded article. To exert such effect, it is preferable to set the content of one or more of Ni and Cu at 0.01% or more in total. However, when the content is excessive and exceeds 0.5%, surface flaw occurs during the production of a steel sheet. Therefore, the total content of these elements is preferably set at 0.5% or less.

(d) 0.0001 to 0.01% or less in total of one or more of Mg, Ca and REM

Mg, Ca and REM (rare earth elements) are effective in refining inclusions and improving the ductility. For that purpose, it is preferable to contain 0.0001% or more in total of these elements. When only properties are taken into consideration, the higher the content, the better. However, since the effect is saturated, the content is preferably set at 0.01% or less in total.

3. Metal Structure of Steel Sheet 20

Martensite in the metal structure of a steel sheet 20 has an area ratio of 70% or more. This makes it possible to increase the strength of the steel sheet 20. The hardness of the steel sheet is preferably Hv300 or higher, and particularly preferably Hv360 or higher.

The area ratio of martensite is determined in the following manner. First, a steel sheet 20 is cut at a cross-section that is parallel to the rolling direction of the steel sheet 20 and orthogonal to the surface of the steel sheet 20. The cut surface was etched with Nital and then observed using SEM (at a magnification of 1,000 or 2,000 times) to distinguish martensite from other metal structures. SEM observation was performed at the position that shifts to the center side only by 1/4 of the thickness t of the steel sheet from the surface of the steel sheet (t/4 position). Then, a ratio of the area of martensite to the area of the entire field of view (area ratio of martensite) was determined.

4. Composition of Built-Up Portion

The composition of the built-up portion is particularly preferably the composition including:

C: 0.10 to 1.00% by mass,
Si: 0.2 to 1.20% by mass,
Mn: 1.0 to 20.0% by mass,
Cr: 1.0 to 30.0% by mass, and
Mo: 0.30 to 1.00% by mass, with the balance being iron and inevitable impurities.

Such built-up portion can be formed from a welding wire with the above composition. For example, the built-up portion can be formed from a solid wire made of a metal material satisfying the above composition. It is also possible to form the built-up portion from a flux-cored welding wire composed of a steel sheath satisfying the above composition and a flux filled in the central portion of the steel sheath.

In the built-up portion (and the welding wire) with the above composition, it is possible to control the hardness after hot forming at Hv360 or higher. Since the built-up portion having high hardness (i.e., high strength) is hardly deformed, the reinforcing effect by the built-up portion can be improved.

When the built-up portion is formed of the welding wire with the above composition, it is possible to suppress excess martensite from being formed inside the built-up portion immediately after the build-up welding or heat treatment. As a result, self-hardened crack defects due to expansion of martensite can be reduced.

When the built-up portion is formed of the welding wire with the above composition, it is possible to offset the amount of volume expansion amount during the formation of martensite from the amount of heat shrinkage during cooling, thus enabling suppression of thermal strain (warpage) of the built-up steel sheet, that is associated with the formation of the built-up portion.

The hardness of the built-up portion is preferably Hv300 or higher, and particularly preferably Hv360 or higher.

Of the above composition of the built-up portion (and welding wire), each of the C content, the Mn content and the Cr content is particularly preferably as follows:

C: 0.10 to 0.50% by mass,
Mn: 1.0 to 5.0% by mass, and
Cr: 1.0 to 5.0% by mass.

The built-up portion (and the welding wire) may further include any other element as long as the built-up portion according to the embodiment of the present invention can maintain properties thereof. Other elements that can be selectively contained in such way are exemplified below.

Ni: 3.00% by mass or less (excluding 0%)

Ni has the effect of improving the toughness of welding metal. However, if the Ni content exceeds 3.00%, solidification cracks easily occur during welding, so that the Ni content is preferably set at 3.00% or less.

Ti: 0.20% by mass or less (excluding 0%)

Ti has the effect of stabilizing an arc to reduce sputtering in a melting polar arc welding that melts while generating an arc from the wire. However, when the Ti content exceeds 0.20%, the migrated droplet becomes unstable since it becomes a large particle, so that the Ti content is preferably set at 0.20% or less.

Cu: 0.50% by mass or less (excluding 0%)

Cu has no benefit as welding metal, but the copper plating on the surface of a welding wire causes a decrease in wear rate of the current-carrying chip, thus enabling an improvement in weldability for a long time. However, if the Cu content exceeds 0.50%, the effect of improving the wear resistance is saturated and welding metal easily causes solidification cracks, so that the Cu content is preferably set at 0.50% or less.

S: 0.020% by mass or less (excluding 0%)

S improves the wettability of molten metal, thus contributing to an improvement in appearance during built-up welding and an improvement in welding speed. However, when the S content exceeds 0.020%, the welding metal easily causes solidification cracks, so that the S content is preferably set at 0.020% or less. This is the upper limit.

Co: 1.00% by mass or less (excluding 0%)

The addition of Co makes it easy to obtain high hardness through a heat treatment after built-up welding. However, if the Co content exceeds 1.00%, excessive martensite is formed inside the built-up portion immediately after the built-up welding or after the heat treatment, and thus self-hardened crack defects due to expansion of martensite easily occur. Therefore, the Co content is preferably set at 1.00% or less.

V: 1.00% by mass or less (excluding 0%)

The addition of V makes it easy to obtain high hardness through a heat treatment after built-up welding. However, if the V content exceeds 1.00%, excessive martensite is formed inside the built-up portion immediately after the built-up welding or after the heat treatment, and thus self-hardened crack defects due to expansion of martensite easily occur. Therefore, the V content is preferably set at 1.00% or less.

W: 2.00% by mass or less (excluding 0%)

The addition of W makes it easy to obtain high hardness through a heat treatment after built-up welding. However, if the W content exceeds 2.00%, excessive martensite is formed inside the built-up portion immediately after the built-up welding or after the heat treatment, and thus self-hardened crack defects due to expansion of martensite easily occur. Therefore, the W content is preferably set at 2.00% or less.

B: 0.020% by mass or less (excluding 0%)

The addition of B makes it easy to obtain high hardness through a heat treatment after built-up welding. However, if the B content exceeds 0.020%, solidification cracks easily occur during welding. Therefore, the B content is preferably set at 0.020% or less.

5. Production Method

A method for producing a steel part according to the embodiment of the present invention will be described below.
The method for producing a steel part includes: a step (1) of preparing a built-up steel sheet, a step (2) of hot-forming the built-up steel sheet, and a step (3) of cooling the built-up steel sheet after subjecting to hot forming.

Step (1): Step of preparing the built-up steel sheet

The built-up steel sheet is prepared which includes: the steel sheet 20 having a composition specified by "2. Composition of Steel Sheet 20" mentioned above; and a built-up portion 30 provided at a predetermined position of the steel sheet 20.
The built-up portion 30 is provided at the position corresponding to a portion that is to be reinforced in the steel part 10 finally obtained. For example, when producing a B pillar as the steel part 10, the built-up portion 30 is provided at a portion that is to be formed on the top of the B pillar.
The step of preparing the built-up steel sheet may include, for example, (1a) preparing the steel sheet 20, and (1b) welding a welding wire to the predetermined position of the steel sheet 20 to form the built-up portion.

(1a) Preparing the steel sheet 20

The steel sheet 20 can be prepared, for example, in the following way.
A cast strip formed by melting a steel material with the predetermined composition is subjected to hot-rolling at a heating temperature of 1,100°C or higher (preferably 1,150°C or higher) and 1,300°C or lower (preferably 1,250°C or lower) and at a finish rolling temperature of 850°C or higher (preferably 900°C or higher) and 1,050°C or lower (preferably 1,000°C or lower). Immediately thereafter, the hot-rolled steel sheet is cooled (quenched) down to 650°C or lower (preferably 625°C or lower) at an average cooling rate of 20°C/sec or more (preferably 30°C/sec or more), sequentially cooled down from 620°C to 580°C at an average cooling rate of 10°C/sec or less (preferably 5°C/sec or less), and then cooled at an average cooling rate of 10°C/sec or more. The cooled steel sheet is then wound up at 350°C or higher (preferably 380°C or higher) and 450°C or lower (preferably 430°C or lower). The elongated steel sheet obtained in this way is cut to an appropriate size.

(1b) Welding the welding wire at the predetermined position of the steel sheet 20 to form the built-up portion

The welding wire is melted on the surface of the cut steel sheet 20 to form the built-up portion 30 at the predetermined position of the steel sheet 20. The suitable welding wire is a solid wire with the composition specified by "4. Composition of Built-Up Portion" described above, or a flux-cored welding wire composed of a steel sheath with the composition and a flux filled in the central portion of the steel sheath. As a method of build-up welding using the welding wire onto the surface of the steel sheet 20, a well-known build-up welding method can be used, and particularly, arc build-up welding is suitable. Specific examples of the arc build-up welding include melting polar gas-shielded arc (MAG) build-up welding and non-melting polar gas-shielded arc (TIG, plasma) build-up welding.

Especially, the melting polar gas-shielded arc welding method is optimal from the comprehensive viewpoint of efficiency, economy, handling and the like, of forming the built-up portion. This welding method is also referred to as MAG welding. This method involves melting a welding wire by generating an arc while feeding the welding wire to thereby melt and mix the wire together with a part of a base metal, thus producing a weld metal. In the embodiment of the present invention, this welding method forms the built-up portion specifically on the steel sheet of the base metal. Examples of shielding gas suitable for use include $CO_2$ gas ($CO_2$ 100%), a mixed gas of two types of gases, namely, $CO_2$ + Ar, or a mixed gas of three types of gases, namely, $CO_2$, Ar, and $O_2$. In the case of the mixed gas, sputtering is less likely to occur as the Ar ratio increases. Ar gas (Ar 100 %) cannot be used in solid wires because of its arc-instability, but can be used in flux-cored wires.

The built-up steel sheet produced in this way has a heat affected zone between the built-up portion and the steel sheet. The heat affected zone has a low hardness, for example, lower than Hv300, before a heat treatment.

It is noted that a plating layer may be provided on the surface of the built-up steel sheet. It is possible to apply, as a method (plating method) of forming the plating layer, a plating method that is usually performed on a steel sheet. Specifically, examples of the suitable plating method include hot-dip galvanizing, electrogalvanizing, and alloyed galvanizing.

Step (2): Step of hot-forming the built-up steel sheet

The resulting built-up steel sheet is subjected to hot forming by being heated to a temperature T1 that is equal to or higher than the Ac3 point of the steel sheet. The hot forming is, for example, hot stamping (hot press forming). The hot stamping can form the built-up steel sheet into a steel part having a desired shape. A mold used in the hot stamping preferably has a concave portion fitted to the shape of the built-up portion, at a position corresponding to the formation position of the built-up portion such that the formed built-up portion is not completely flattened by the hot stamping. It is noted that as long as the strength of the steel part finally obtained is high in a portion provided with the built-up portion and low in a portion not provided with the built-up portion, the built-up portion may change its shape during the hot stamping process (for example, the height of the built-up portion becomes low).

By performing such hot forming process, even the built-up steel sheet having thermal strain can eliminate thermal strain (residual stress) therefrom.

When forming the built-up steel sheet into a steel part with a predetermined shape, the pressure applied from the mold to the built-up steel sheet can be appropriately set depending on the thickness of the steel sheet and the shape and dimension of the steel part. This pressure is generally 0 to 100 MPa, for example, 5 to 70 MPa. The pressure applied from the mold to the built-up steel sheet affects the cooling rate of the steel sheet after the hot forming. In the embodiment of the present invention, the pressure of the mold is preferably controlled so as to achieve an average cooling rate that can produce a steel sheet having a desired metal structure (with a martensite area ratio of 70% or more).

Step (3): Step of cooling the built-up steel sheet after the hot forming

The hot formed built-up steel sheet is cooled to a temperature T2 that is equal to or lower than the Ms point of the steel sheet. At this time, the steel sheet is cooled so that the martensite area ratio in the metal structure of the steel sheet becomes 70% or more. This makes it possible to increase the strength of the steel sheet in the steel part as the final product.

It is noted that the state of being "cooled so that the martensite ratio in the metal structure of the steel sheet is 70% or more" can be achieved in the steel sheet with the composition according to the embodiment of the present invention, for example, by controlling the average cooling rate to 5°C/sec or more, preferably 20°C/sec or more, at temperatures ranging from a temperature T1 (corresponding to the cooling starting temperature), that is a temperature at the time of the hot forming, to the cooling finishing temperature T2. The upper limit of the average cooling rate is not particularly limited. However, in the case of cooling the built-up steel sheet being pinched by the mold, the average cooling rate is preferably 100°C/sec or less in terms of implementability. The cooling may be performed at a constant cooling rate at temperatures ranging from T1 to T2, or alternatively at varied cooling rates. For the steel sheet with excellent hardenability, the average cooling rate only needs to be 3°C/sec or more, whereby the martensite area ratio can become 70% or more.

In this way, a steel part with the desired properties can be obtained. It should be noted that in the steel part being cooled, martensite of the steel sheet is poor in terms of the ductility. Thus, in order to improve the ductility of the steel sheet, the steel part may be subjected to tempering, thereby converting the martensite in the steel sheet into tempered martensite.

In the method for producing a steel part according to the embodiment of the present invention, the heat affected zone (HAZ) formed in the step (1) is subjected to heat treatment by undergoing the hot forming in the step (2) and the cooling in the step (3). The strength (and hardness) of the HAZ before the heat treatment is low due to HAZ softening, but is improved by the heat treatment. Thus, the steel part is less likely to become cracked from the HAZ as origin.

Furthermore, in the method for producing a steel part according to the embodiment of the present invention, after forming the built-up portion in the step (1), the hot forming is performed in the step (2). Thus, even if warpage occurs in the built-up steel sheet in the step (1), the warpage is corrected by the subsequent hot forming, so that warpage that would be caused by the built-up portion can be sufficiently reduced in the steel part finally obtained.

Examples

In this Example, five types of measurements are performed using a built-up steel sheet. Types of measurements are as follows: measurement (1): measurement of thermal strain, measurement (2): observation of weld zone, measurement (3): observation of metal structure, measurement (4): measurement of hardness, and measurement (5): bending crash test.

The details of each measurement and the fabrication procedure of samples used for each measurement will be described below.

(1) Measurement of Thermal Strain

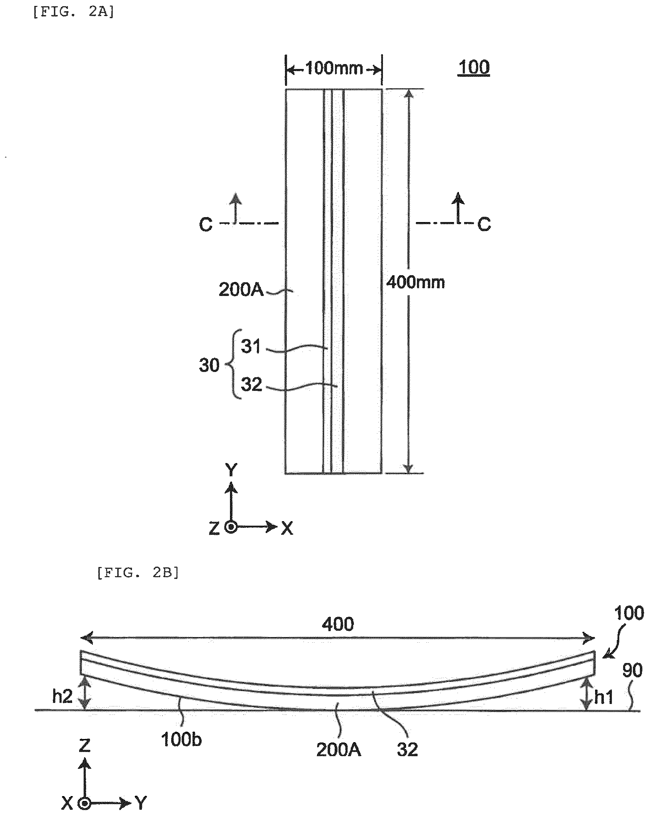

Thermal strain is evaluated by warpage of a built-up steel sheet before subjecting to a heat treatment. As shown in FIG. 2A, a built-up steel sheet 100 in which two rows of built-up portions 30 are formed on a rectangular steel sheet 200A is prepared. As shown in FIG. 2B, a measurement sample 100 is placed on a surface plate 90 such that a back surface 100b (surface on which the built-up portion 30 is not formed) of the built-up steel sheet 100 faces downward. Distances h1 and h2 (jump-up) between both ends in the longitudinal direction of the measurement sample 100 and the surface of the surface plate 90 are respectively read using a height gauge. The sample in which both of the distances h1 and h2 are 10 mm or less is rated "pass" ("OK" in Table 4), whereas the sample in which at least one of the distances h1 and h2 exceeds 10 mm is rated "fail" ("NG" in Table 4).

(2) Observation of Weld zone

In observation of weld zone, the built-up portion of the built-up steel sheet before subjecting to the heat treatment is visually observed as a whole and further observed using a microscope at a magnification of 50 times. The sample in which no crack is confirmed by the visual observation and the microscope observation is rated "pass" ("OK" in Table 4), whereas the sample in which cracks are confirmed by one or both of the visual observation and the microscope observation is rated "fail" ("NG" in Table 4).

(3) Observation of Metal Structure

In observation of the metal structure, only the metal structure of the steel sheet portion among the built-up steel sheet after subjecting to the heat treatment is the observation object. First, the built-up steel sheet is cut at a cross-section that is parallel to the rolling direction of the steel sheet and orthogonal to the surface of the steel sheet. In the built-up steel sheet 100 shown in FIG. 2A, if the X direction (the width direction of the steel sheet 200A) is the .rolling direction, the built-up steel sheet 100 is cut into two pieces along line C-C. After embedding one cut piece in a resin, the cut surface of the cut piece is polished. The polished cut surface was etched with Nital and then observed using SEM (at a magnification of 1,000 or 2,000 times) to distinguish martensite from other metal structures. SEM observation is performed at the position that shifts to the center side only by 1/4 of the thickness t of the steel sheet from the surface of the steel sheet (t/4 position). Then, a ratio of the area of martensite to the area of the entire field of view (area ratio of martensite) is determined. The sample in which the area ratio of martensite is 70% or more is rated "pass" ("OK" in Table 4), whereas the sample in which the area ratio of martensite is less than 70% is rated "fail" ("NG" in Table 4).

(4) Measurement of Hardness

A built-up steel sheet after subjecting to the heat treatment is used for the measurement of the hardness. The heat-treated built-up steel sheet is cut at a cross-section that passes through a first built-up portion 31 and a second built-up portion 32 and is parallel to the rolling direction of the steel sheet and orthogonal to the surface of the steel sheet. In the built-up steel sheet 100 shown in FIG. 2A, if the X direction (width direction of the steel sheet 200A) is the rolling direction, the built-up steel sheet 100 is cut into two pieces along line C-C. After embedding one cut piece in a resin, the cut surface of the cut piece is polished. On the polished cut surface, each hardness of the steel sheet portion, the heat affected zone, and the built-up portion are measured. To specify the steel sheet 200A, the heat affected zone 40, and the built-up portion 30, the cut surface is subjected to Picral etching.

The hardness may be measured using the cut piece used for the observation of the metal structure. In that case, the hardness is preferably measured after polishing the Nital-etched cut surface.

The measurement position and evaluation criteria for measuring the hardness of the steel sheet were set as follows.

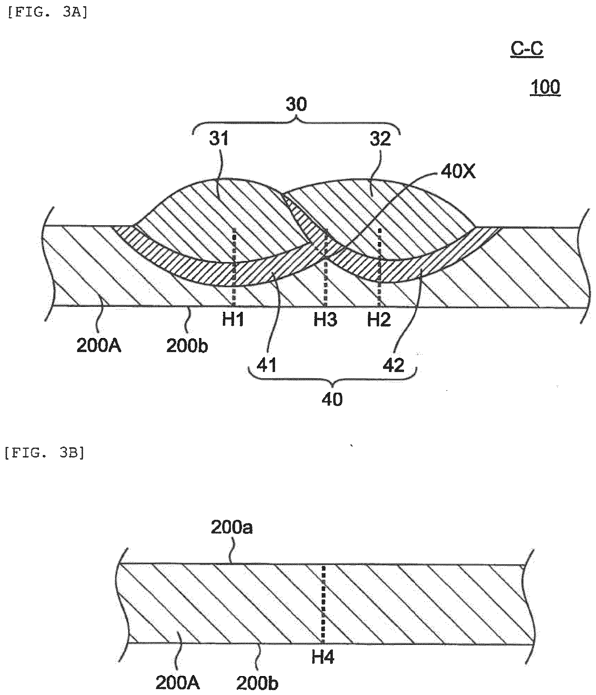

FIG. 3A is a schematic view of a cut surface of the built-up steel sheet 100. On the cut surface, three lines H1 to H3 were assumed. The first line H1 was a line orthogonal to a back surface 200b of the steel sheet 200A and extending from the vicinity of the center of the first built-up portion 31 to the back surface 200b of the steel sheet 200A through the first heat affected zone 41. The second line H2 was a line orthogonal to the back surface 200b of the steel sheet 200A and extending from the vicinity of the center of the second built-up portion 32 to the back surface 200b of the steel sheet 200A through the second heat affected zone 42. The third line H3 was a line orthogonal to the back surface 200b of the steel sheet 200A and extending from a boundary line between the second built-up portion and the second heat affected zone 42 to the back surface 200b of the steel sheet 200A through a pass fusion zone 40x. The "pass fusion zone 40x" as used herein refers to a portion where the first heat affected zone 41 and the second heat affected zone 42 intersect together, and in which a boundary line between the steel sheet 200A and the heat affected zone 40 becomes convex. Along these lines H1 to H3, the micro-Vickers hardness of the steel sheet was measured at a pitch of 0.25 mm.

When measuring the hardness of a steel sheet with no built-up portion as a comparative example, the measurement position was set as follows. The steel sheet was cut at a cross-section parallel to the rolling direction of the steel sheet and orthogonal to the surface of the steel sheet. FIG. 3B is a schematic diagram of a cut surface of the steel sheet 200A. On the cut surface, a line H4 orthogonal to a back surface 200b of the steel sheet 200A and extending from the front surface 200a to back surface 200b of the steel sheet 200A was assumed. Along the line H4, the micro-Vickers hardness of the steel sheet in the comparative example was measured at a pitch of 0.25 mm.

Regarding each measurement sample, the lowest value of all measured hardnesses thereof is described in the column labeled "lowest hardness" of Table 4. The column labeled "Lowest hardness position" of Table 4 describes "A" when the "lowest hardness" was measured at the built-up portion 30; "B" when it was measured at the heat affected zone 40; and "C" when it was measured at the steel sheet 20.

Furthermore, the measurement of the hardness using the above-mentioned measurement method means that the hardness of the heat affected zone was measured at a plurality of points. Regarding each measurement sample, the lowest value of the plurality of hardnesses obtained by measurement of the heat affected zone was evaluated. In the column labeled "hardness of the heat affected zone" of Table 4, the sample in which the lowest hardness of the heat affected zone was Hv300 or higher was rated "pass" ("OK" in Table 4), whereas the sample in which the lowest hardness of the heat affected zone was lower than Hv300 was rated "fail" ("NG" in Table 4).

(5) Bending Crash Test

The bending crash test is performed using the built-up steel sheet that was passed observation of weld zone of the measurement (2). This is because cracks have already occurred before performing the bending crush test in the built-up steel sheet that was failed in observation of weld zone, thus failing to accurately observe cracks that occur in the bending crush test.

In the bending crush test, a built-up steel sheet formed into a hat channel is used.

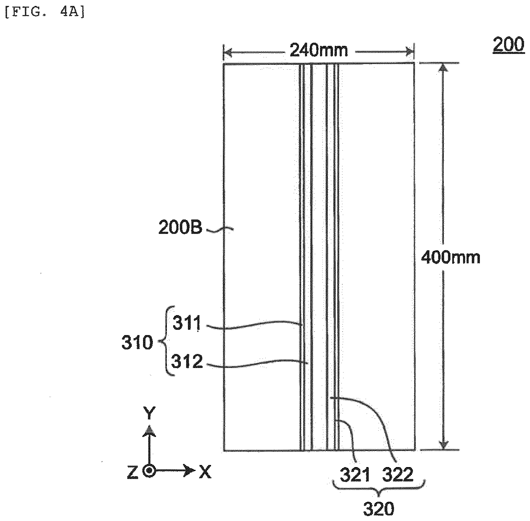

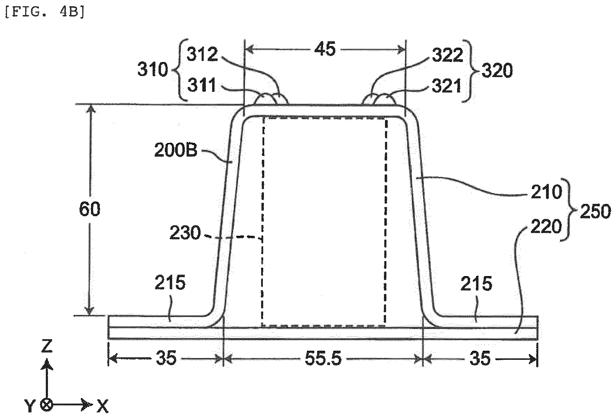

As shown in FIG. 4A, a steel sheet 200B of 240 mm in width, 400 mm in length, and 1.4 mm in thickness is prepared. The steel sheet 200B is prepared such that the longitudinal direction is orthogonal to the rolling direction. Two pairs of a pair of two rows of built-up portions are provided on the surface of the steel sheet 200B. In other words, the steel sheet 200B includes a first pair of built-up portions 310 (a first built-up portion 311 and a second built-up portion 312) and a second pair of built-up portions 320 (a third built-up portion 321 and a fourth built-up portion 322) on the surface thereof. The built-up steel sheet 200 is formed into a shape of a hat channel 210 as shown in FIG. 4B. Forming is performed by hot working (e.g., hot forming such as hot stamping) or cold working (e.g., press brake) depending on the purpose.

A back plate 220 for covering the opening portion (lower side in FIG. 4B) of the hat channel 210 is separately prepared. As the back plate 220, a 590 DP steel sheet of 122 mm in width, 400 mm in length, and 1.4 mm in thickness is used. The back plate 220 is prepared such that the longitudinal direction is orthogonal to the rolling direction.

The back plate 220 is disposed so as to cover the opening of the hat channel 210, and then a flange 215 of the hat channel 210 and the back plate 220 are spot-welded (FIG. 4B). Spot welding is performed at a plurality of places along the longitudinal direction of the hat channel (e.g., 13 places with a pitch of 30 mm). The hat channel 210 is fixed to the back plate 220 by spot welding to obtain a specimen 250 for a bending crush test. A reinforcing member 230 is disposed in the vicinity of both ends of the specimen (in a range of about 40 mm from the end).

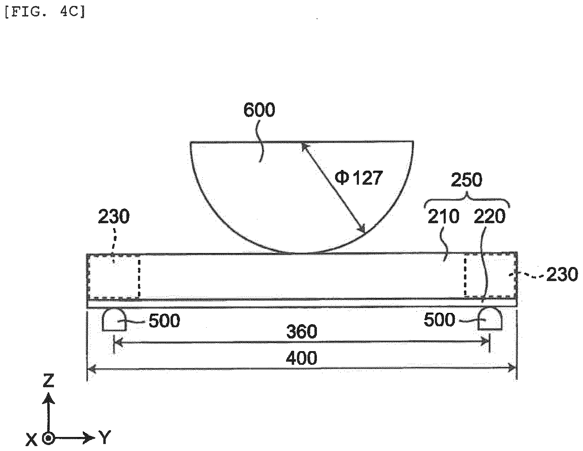

As shown in FIG. 4C, the specimen 250 is disposed on two supports 500 with the back surface (back plate 220 side) thereof facing downward. The interval (span) of the support 500 is set at 360 mm, and the vicinity of both ends in the longitudinal direction (Y direction) of the specimen 250 is supported by the support 500. Note that a sheet made of Teflon (registered trademark) is interposed between the specimen 250 and each support 500.

In a state where the specimen 250 is supported by the support 500, the top surface of the hat channel 210 is pressed with an indenter 600. The indenter 600 to be used has a semi-cylindrical shape having a radius of 127 mm. The indenter 600 is disposed so as to be in contact with the vicinity of the approximate center in the longitudinal direction of the specimen 250, and then descended by 80 mm at an indentation speed of 20 mm/min. This makes it possible to deform the specimen 250 so as to curve downward between the supports 500 (bending crash). Note that a sheet made of Teflon (registered trademark) is interposed between the specimen 250 and the indenter 600.

Of the specimen 250 subjected to bending crash, the top surface of the hat channel 210 (more specifically, the region deformed in a curved manner of the top surface) is visually observed. In visual observation, the sample in which no crack could be confirmed in the heat affected zone of the steel sheet 200B (in the vicinity of the built-up portions 311, 312, 313 and 314) is rated "pass" ("OK" in Table 4), whereas the sample in which cracks were confirmed is rated "fail" ("NG" in Table 4).

<Fabrication of Samples>

A method for fabricating samples used for the above-mentioned measurements (1) to (5) will be described below.

According to the compositions and manufacturing conditions shown in Tables 1 to 3, samples Nos. 1 to 17, 101 to 105, 107 to 115, and 201 to 206 were prepared.

In Tables 1 to 3, the numerical values and conditions marked with an asterisk (*) indicate that they deviate from the ranges or conditions in the embodiment of the present invention.

A steel material with the composition shown in Table 1 was vacuum-melted to obtain an experimental slab, followed by hot-rolling to obtain a steel sheet. Thereafter, the steel sheet was cooled subjected to a treatment simulating winding. After cooling to a winding temperature (400°C), the sample was placed in a furnace heated to the winding temperature, held for 30 minutes and then furnace-cooled. Thereafter, cold-rolling was performed and continuous annealing was simulated using a heat treatment simulator. In the simulation test of continuous annealing, the cold-rolled steel sheet was heated to 800°C, held for 90 seconds, cooled to 500°C at an average cooling rate of 20°C/sec, and then held for 300 seconds. Thereafter, the cold-rolled steel sheet was air-cooled to room temperature. The steel sheet thus obtained had a thickness of 1.4 mm.

From the obtained steel sheet, a steel sheet piece (steel sheet piece 200A) used for the measurements (1) to (4) (this is referred to as "sample A") and a steel sheet piece (steel sheet piece 200B) used for the measurement (5) (this is referred to as "sample B") were prepared, respectively.

The fabrication procedure of samples A and B will be described below.

(Fabrication of Sample A)

The steel sheet prepared as mentioned above was cut to produce a steel sheet piece 200A of 100 mm in width, 400 mm in length, and 1.4 mm in thickness (FIG. 2A). At this time, the steel sheet piece 200A was produced such that the longitudinal direction (Y direction in FIG. 2A) of the steel sheet piece 200A was orthogonal to the rolling direction (X direction in FIG. 2A) of the steel sheet. Then, as shown in FIG. 2A, two rows of built-up portions 30 (the first built-up portion 31 and the second built-up portion 32) were formed on the surface of the steel sheet piece 200A. The built-up portion 30 was formed by a melting polar gas-shielded arc under the following welding conditions: welding current of 130 A; arc voltage of 15.5 V; welding speed of 1,000 mm/min; and shielded gas shown in Table 2.

Two rows of built-up portions 30 were formed in two passes. First, the first built-up portion 31 extending along the longitudinal direction of the steel sheet piece 200A was formed substantially at the center in the width direction of the steel sheet piece 200A (in the first pass), and then the second built-up portion 32 was formed in parallel with the first built-up portion 31 (in the second pass). The second built-up portion 32 formed in the second pass was formed so as to overlap a part of the first built-up portion 31 formed in the first pass. By using a solid wire with the composition shown in Table 2, each built-up portion with the composition shown in Table 2 was formed.

In samples Nos. 101 and 102, any built-up portion was not formed.

Using the built-up steel sheet 100 (FIG. 2A) with the built-up portion 30 provided in the steel sheet piece 200A, (1) thermal strain was measured, and (2) weld zone obtained immediately after the welding were observed. The results of the measurements (1) and (2) are shown in Table 4.

Next, the built-up steel sheet 100 was heat-treated under the heat treatment conditions in Table 3. Specifically, the built-up steel sheet is heated to the "elevated temperature" shown in Table 3 and held at the same temperature for 2 minutes. Thereafter, the built-up steel sheet was cooled to "cooling finishing temperature" shown in Table 3 at "cooling rate" shown in Table 3. The Ac3 point and Ms point of the steel sheet used in each sample are also shown in Table 3. The Ac3 point and the Ms point of each sample were obtained using the following equations (1) and (2), respectively.

$$\text{Ac3 point } (^{\circ}\text{C}) = 910 - 203 \times [\text{C}]^{1/2} + 44.7 \times [\text{Si}] - 30 \\ \times [\text{Mn}] + 700 \times [\text{P}] + 400 \times [\text{Al}] + 400 \times [\text{Ti}] + 104 \times [\text{V}] - 11 \\ \times [\text{Cr}] + 31.5 \times [\text{Mo}] - 20 \times [\text{Cu}] - 15.2 \times [\text{Ni}] \qquad (1)$$

$$\text{Ms point } (^{\circ}\text{C}) = 550 - 361 \times [\text{C}] - 39 \times [\text{Mn}] - 10 \times \\ [\text{Cu}] - 17 \times [\text{Ni}] - 20 \times [\text{Cr}] - 5 \times [\text{Mo}] + 30 \times [\text{Al}] \qquad (2)$$

In the equations (1) and (2), [C], [Si], [Mn], [P], [Al], [Ti], [V], [Cr], [Mo], [Cu] and [Ni] represent each content (% by mass) of C, Si, Mn, P, Al, Ti, V, Cr, Mo, Cu and Ni. When the elements shown in the respective terms of the equations (1) and (2) are not included, calculation is made assuming that there is no such term.

Using the heat-treated built-up steel sheet 100, (3) the metal structure was observed, and then (4) the hardness was measured. The measurement results of measurements (3) and (4) are shown in Table 4.

Sample No. 101 (without built-up portion) and sample No. 103 (with built-up portion) were not subjected to a heat treatment. Regarding sample No. 104 (with built-up portion), the steel sheet before the formation of the built-up portion was subjected to a heat treatment under the heat treatment conditions in Table 3, and then the built-up portion was formed, and the heat treatment was not performed after the formation of the built-up portion.

(Fabrication of Sample B)

The steel sheet prepared as mentioned above was cut to produce a steel sheet piece 200B of 240 mm in width, 400 mm in length, and 1.4 mm in thickness (FIG. 4A). At this time, the steel sheet piece 200B was produced such that the longitudinal direction (Y direction in FIG. 4A) of the steel sheet piece 200B was orthogonal to the rolling direction (X direction in FIG. 4A) of the steel sheet. Then, as shown in FIG. 4A and FIG. 4B, two pairs of a pair of two rows of built-up portions were formed on the surface of the steel sheet piece 200B. A first pair of built-up portions 310 (a first built-up portion 311 and a second built-up portion 312) were formed in two passes, and a second pair of built-up portions 320 (a first built-up portion 321 and a second built-up portion 322) were formed in two passes. The built-up portions 310 and 320 were formed by a melting polar gas-shielded arc under the following welding conditions: welding current of 130 A; arc voltage of 15.5 V; welding speed of 1,000 mm/min; and shielded gas shown in Table 2.

The pairs of built-up portions 310 and 320 are formed along the longitudinal direction of the steel sheet piece 200B. The position where the pairs of built-up portions 310 and 320 are formed in the width direction of the steel sheet 100B is set such that the pairs of built-up portions 310 and 320 are formed on the top surface of the hat channel 210 when forming into a shape of the hat channel 210 as shown in FIG. 4B. More specifically, the formation position is set such that the pairs of built-up portions 310 and 320 are located at the position that is about 5 mm away from the ridge line with the side surface of the top surface. By using a solid wire with the composition shown in Table 2, each built-up portion with the composition shown in Table 2 was formed.

In samples Nos. 101 and 102, any built-up portion was not formed.

The built-up steel sheet 200 provided with the built-up portion was formed into a hat channel having dimension and shape shown in FIG. 4B. Regarding samples Nos. 103 and 104, cold-rolling was performed by press brake. Regarding other samples, hot forming was performed by hot stamping. Hot stamping was performed by applying the conditions of the temperature, the cooling rate, and the cooling finishing temperature of the heat treatment conditions shown in Table 2. A working force during hot stamping was set at 1,000 kN. An average pressure applied from a mold to the built-up steel sheet 200 was about 10 MPa.

As the back plate 220, a 590 DP steel sheet of 122 mm in width, 400 mm in length, and 1.4 mm in thickness was prepared. The longitudinal direction of the back plate 220 was orthogonal to the rolling direction.

As shown in FIG. 4B, the back plate 220 was disposed so as to cover the opening of the hat channel 210, and then a flange 215 of the hat channel 210 and the back plate 220 were spot-welded to obtain a specimen 250. Spot welding was performed at thirteen places along the longitudinal direction of the hat channel with a pitch of 30 mm. The specimen 250 was reinforced with a reinforcing member 230 in a range of about 40 mm from the end of the specimen.

As shown in FIG. 4C, the specimen 250 was disposed on two supports 500, and a bending crush test was performed using an indenter 600.

Regarding sample No. 101 (without built-up portion) and sample No. 103 (with built-up portion), a heat treatment was not performed. Regarding sample No. 104 (with built-up portion), the steel sheet before the formation of the built-up portion was subjected to a heat treatment under the heat treatment conditions in Table 3, and the heat treatment was not performed after the formation of the built-up portion.

[Table 1]

| Sample No. | Composition of steel sheet (% by mass) | | | | | | | | |
|---|---|---|---|---|---|---|---|---|---|
|  | C | Si | Mn | P | S | Al | B | N | Ti |
| 1 | 0.22 | 0.5 | 2.5 | 0.01 | 0.003 | 0.05 | 0.002 | 0.003 | 0.1 |
| 2 | 0.4 | 0.5 | 2.5 | 0.01 | 0.003 | 0.05 | 0.002 | 0.003 | 0.1 |
| 3 | 0.16 | 0.5 | 2.5 | 0.01 | 0.003 | 0.05 | 0.002 | 0.003 | 0.1 |
| 4 | 0.22 | 0.5 | 2.5 | 0.01 | 0.003 | 0.05 | 0.002 | 0.003 | 0.1 |
| 5 | 0.22 | 0.5 | 2.5 | 0.01 | 0.003 | 0.05 | 0.002 | 0.003 | 0.1 |
| 6 | 0.22 | 0.5 | 2.5 | 0.01 | 0.003 | 0.05 | 0.002 | 0.003 | 0.1 |
| 7 | 0.22 | 1.5 | 2.5 | 0.01 | 0.003 | 0.05 | 0.002 | 0.003 | 0.1 |
| 8 | 0.22 | 1.5 | 2.5 | 0.01 | 0.003 | 0.05 | 0.002 | 0.003 | 0.1 |
| 9 | 0.22 | 0.5 | 4.9 | 0.01 | 0.003 | 0.05 | 0.002 | 0.003 | 0.1 |
| 10 | 0.22 | 0.5 | 0.6 | 0.01 | 0.003 | 0.05 | 0.002 | 0.003 | 0.1 |
| 11 | 0.22 | 0.5 | 2.5 | 0.01 | 0.003 | 0.05 | 0.002 | 0.003 | 0.1 |
| 12 | 0.22 | 0.5 | 2.5 | 0.01 | 0.003 | 0.05 | 0.002 | 0.003 | 0.1 |
| 13 | 0.22 | 0.5 | 2.5 | 0.01 | 0.003 | 0.05 | 0.002 | 0.003 | 0.1 |
| 14 | 0.22 | 0.5 | 2.5 | 0.01 | 0.003 | 0.05 | 0.002 | 0.003 | 0.1 |
| 15 | 0.22 | 0.5 | 2.5 | 0.01 | 0.003 | 0.05 | 0.002 | 0.003 | 0.1 |
| 16 | 0.22 | 0.5 | 2.5 | 0.01 | 0.003 | 0.05 | 0.002 | 0.003 | 0.1 |
| 17 | 0.22 | 0.5 | 2.5 | 0.01 | 0.003 | 0.05 | 0.002 | 0.003 | 0.1 |
| 101 | 0.22 | 0.5 | 2.5 | 0.01 | 0.003 | 0.05 | 0.002 | 0.003 | 0.1 |
| 102 | 0.22 | 0.5 | 2.5 | 0.01 | 0.003 | 0.05 | 0.002 | 0.003 | 0.1 |
| 103 | 0.22 | 0.5 | 2.5 | 0.01 | 0.003 | 0.05 | 0.002 | 0.003 | 0.1 |
| 104 | 0.22 | 0.5 | 2.5 | 0.01 | 0.003 | 0.05 | 0.002 | 0.003 | 0.1 |
| 105 | 0.22 | 0.5 | 2.5 | 0.01 | 0.003 | 0.05 | 0.002 | 0.003 | 0.1 |
| 107 | 0.22 | 0.5 | 2.5 | 0.01 | 0.003 | 0.05 | 0.002 | 0.003 | 0.1 |
| 108 | 0.22 | 0.5 | 2.5 | 0.01 | 0.003 | 0.05 | 0.002 | 0.003 | 0.1 |
| 109 | 0.22 | 0.5 | 2.5 | 0.01 | 0.003 | 0.05 | 0.002 | 0.003 | 0.1 |
| 110 | 0.22 | 0.5 | 2.5 | 0.01 | 0.003 | 0.05 | 0.002 | 0.003 | 0.1 |
| 111 | 0.22 | 0.5 | 2.5 | 0.01 | 0.003 | 0.05 | 0.002 | 0.003 | 0.1 |
| 112 | 0.22 | 0.5 | 2.5 | 0.01 | 0.003 | 0.05 | 0.002 | 0.003 | 0.1 |
| 113 | 0.22 | 0.5 | 2.5 | 0.01 | 0.003 | 0.05 | 0.002 | 0.003 | 0.1 |
| 114 | 0.22 | 0.5 | 2.5 | 0.01 | 0.003 | 0.05 | 0.002 | 0.003 | 0.1 |

(continued)

| Sample No. | Composition of steel sheet (% by mass) | | | | | | | | |
|---|---|---|---|---|---|---|---|---|---|
| | C | Si | Mn | P | S | Al | B | N | Ti |
| 115 | 0.22 | 0.5 | 2.5 | 0.01 | 0.003 | 0.05 | 0.002 | 0.003 | 0.1 |
| 201 | *0.05 | 0.5 | 2.5 | 0.01 | 0.003 | 0.05 | 0.002 | 0.003 | 0.1 |
| 202 | 0.22 | *0.05 | 2.5 | 0.01 | 0.003 | 0.05 | 0.002 | 0.003 | 0.1 |
| 203 | 0.22 | 0.5 | *0.4 | 0.01 | 0.003 | 0.05 | 0.002 | 0.003 | 0.1 |
| 205 | 0.22 | 0.5 | 2.5 | 0.01 | 0.003 | 0.05 | *0.001 | 0.003 | 0.1 |
| 206 | 0.22 | 0.5 | 2.5 | 0.01 | 0.003 | 0.05 | 0.002 | 0.003 | *0.004 |

[Table 2]

| Sample No. | Composition of built-up portion (% by mass) | | | | | | Composition of shield gas |
|---|---|---|---|---|---|---|---|
| | C | Si | Mn | Cr | Mo | Others | |
| 1 | 0.2 | 0.8 | 2 | 2 | 0.5 | - | $80Ar+20CO_2$ |
| 2 | 0.2 | 0.8 | 2 | 2 | 0.5 | - | $80Ar+20CO_2$ |
| 3 | 0.2 | 0.8 | 2 | 2 | 0.5 | - | $80Ar+20CO_2$ |
| 4 | 0.4 | 0.8 | 2 | 2 | 0.5 | - | $80Ar+20CO_2$ |
| 5 | 0.12 | 0.8 | 2 | 2 | 0.5 | - | $80Ar+20CO_2$ |
| 6 | 0.2 | 0.8 | 2 | 2 | 0.5 | - | $80Ar+20CO_2$ |
| 7 | 0.2 | 0.8 | 2 | 2 | 0.5 | - | $80Ar+20CO_2$ |
| 8 | 0.2 | 0.8 | 2 | 2 | 0.5 | - | $80Ar+20CO_2$ |
| 9 | 0.2 | 0.8 | 2 | 2 | 0.5 | - | $80Ar+20CO_2$ |
| 10 | 0.2 | 0.8 | 2 | 2 | 0.5 | - | $80Ar+20CO_2$ |
| 11 | 0.2 | 1 | 2 | 2 | 0.5 | - | $80Ar+20CO_2$ |
| 12 | 0.2 | 0.3 | 2 | 2 | 0.5 | - | $80Ar+-20CO_2$ |
| 13 | 0.2 | 0.8 | 18 | 2 | 0.5 | - | $80Ar+20CO_2$ |
| 14 | 0.2 | 0.8 | 1.1 | 2 | 0.5 | - | $80Ar+20CO_2$ |
| 15 | 0.2 | 0.8 | 2 | 28 | 0.5 | - | $80Ar+20CO_2$ |
| 16 | 0.2 | 0.8 | 2 | 1.1 | 0.5 | - | $80Ar+20CO_2$ |
| 17 | 0.2 | 0.8 | 2 | 2 | 0.9 | - | $80Ar+20CO_2$ |
| 101 | *Without built-up portion | | | | | | |
| 102 | *Without built-up portion | | | | | | |
| 103 | 0.20 | 0.8 | 2.0 | 2.0 | 0.50 | - | $80Ar+20CO_2$ |
| 104 | *0.05 | 0.5 | 1.2 | - | - | - | $80Ar+20CO_2$ |
| 105 | 0.20 | 0.8 | 2.0 | 2.0 | 0.50 | - | $80Ar+20CO_2$ |
| 107 | *0.08 | 0.9 | 2.5 | 4.0 | 0.50 | Ti:0.10 | $80Ar+20CO_2$ |
| 108 | 0.15 | *0.1 | 1.2 | 1.4 | 0.40 | - | $CO_2$ |
| 109 | 0.25 | 0.5 | *0.9 | 2.5 | 1.00 | B:0.003 | $80Ar+20CO_2$ |
| 110 | 0.20 | 1.1 | 1.5 | *0.05 | 0.50 | - | $CO_2$ |

(continued)

| Sample No. | Composition of built-up portion (% by mass) | | | | | | Composition of shield gas |
|---|---|---|---|---|---|---|---|
| | C | Si | Mn | Cr | Mo | Others | |
| 111 | 0.13 | 0.6 | 2.5 | 3.5 | *0.20 | - | 80Ar+20CO$_2$ |
| 112 | *0.55 | 0.5 | 2.0 | 5.0 | 1.00 | - | 80Ar+20CO$_2$ |
| 113 | 0.20 | *1.3 | 1.6 | 10.0 | 0.60 | Ni:0.6 | 80Ar+20CO$_2$ |
| 114 | 0.15 | 0.9 | *22.0 | 7.0 | 0.50 | - | 80Ar+20CO$_2$ |
| 115 | 0.22 | 0.7 | 10.0 | 12.5 | *1.10 | Co:0.5 | 80Ar+20CO$_2$ |
| 201 | 0.2 | 0.8 | 2 | 2 | 0.5 | - | 80Ar+20CO$_2$ |
| 202 | 0.2 | 0.8 | 2 | 2 | 0.5 | - | 80Ar+20CO$_2$ |
| 203 | 0.2 | 0.8 | 2 | 2 | 0.5 | - | 80Ar+20CO$_2$ |
| 205 | 0.2 | 0.8 | 2 | 2 | 0.5 | - | 80Ar+20CO$_2$ |
| 206 | 0.2 | 0.8 | 2 | 2 | 0.5 | - | 80Ar+20CO$_2$ |

[Table 3]

| Sample No. | Heat treatment | | | | | |
|---|---|---|---|---|---|---|
| | Timing of heat treatment | Ac3 point (°C) | Elevated temperature (°C) | Average cooling rate (°C/sec) | Ms point (°C) | Cooling finishing temperature (°C) |
| 1 | After build-up welding | 829.1 | 900 | 40 | 324.6 | 100 |
| 2 | After build-up welding | 796.0 | 900 | 40 | 259.6 | 100 |
| 3 | After build-up welding | 843.2 | 900 | 40 | 346.2 | 100 |
| 4 | After build-up welding | 829.1 | 900 | 40 | 324.6 | 100 |
| 5 | After build-up welding | 829.1 | 900 | 40 | 324.6 | 100 |
| 6 | After build-up welding | 829.1 | 880 | 25 | 324.6 | 100 |
| 7 | After build-up welding | 873.8 | 880 | 10 | 324.6 | 100 |
| 8 | After build-up welding | 873.8 | 900 | 40 | 324.6 | 100 |
| 9 | After build-up welding | 757.1 | 900 | 40 | 231.0 | 100 |
| 10 | After build-up welding | 886.1 | 900 | 40 | 398.7 | 100 |
| 11 | After build-up welding | 829.1 | 900 | 40 | 324.6 | 100 |
| 12 | After build-up welding | 829.1 | 900 | 40 | 324.6 | 100 |

(continued)

| Sample No. | Heat treatment | | | | | |
|---|---|---|---|---|---|---|
| | Timing of heat treatment | Ac3 point (°C) | Elevated temperature (°C) | Average cooling rate (°C/sec) | Ms point (°C) | Cooling finishing temperature (°C) |
| 13 | After build-up welding | 829.1 | 900 | 40 | 324.6 | 100 |
| 14 | After build-up welding | 829.1 | 900 | 40 | 324.6 | 100 |
| 15 | After build-up welding | 829.1 | 900 | 40 | 324.6 | 100 |
| 16 | After build-up welding | 829.1 | 900 | 40 | 324.6 | 100 |
| 17 | After build-up welding | 829.1 | 900 | 40 | 324.6 | 100 |
| 101 | Without heat treatment | | | | | |
| 102 | (Without build-up welding) | 829.1 | 900 | 40 | 324.6 | 100 |
| 103 | *Without heat treatment | | | | | |
| 104 | *Before build-up welding | 829.1 | 900 | 40 | 324.6 | 100 |
| 105 | After build-up welding | 829.1 | *700 | 40 | 324.6 | 100 |
| 107 | After build-up welding | 829.1 | 900 | 40 | 324.6 | 100 |
| 108 | After build-up welding | 829.1 | 900 | 40 | 324.6 | 100 |
| 109 | After build-up welding | 829.1 | 900 | 40 | 324.6 | 100 |
| 110 | After build-up welding | 829.1 | 900 | 40 | 324.6 | 100 |
| 111 | After build-up welding | 829.1 | 900 | 40 | 324.6 | 100 |
| 112 | After build-up welding | 829.1 | 900 | 40 | 324.6 | 100 |
| 113 | After build-up welding | 829.1 | 900 | 40 | 324.6 | 100 |
| 114 | After build-up welding | 829.1 | 900 | 40 | 324.6 | 100 |
| 115 | After build-up welding | 829.1 | 900 | 40 | 324.6 | 100 |
| 201 | After build-up welding | 879.0 | 900 | 40 | 386.0 | 100 |
| 202 | After build-up welding | 809.0 | 900 | 40 | 324.6 | 100 |

(continued)

| Sample No. | Timing of heat treatment | Ac3 point (°C) | Elevated temperature (°C) | Average cooling rate (°C/sec) | Ms point (°C) | Cooling finishing temperature (°C) |
|---|---|---|---|---|---|---|
| | | | Heat treatment | | | |
| 203 | After build-up welding | 892.1 | 900 | 40 | 406.5 | 100 |
| 205 | After build-up welding | 829.1 | 900 | 40 | 324.6 | 100 |
| 206 | After build-up welding | 790.7 | 900 | 40 | 324.6 | 100 |

[Table 4]

| Sample No. | Presence or absence of built-up portion | (1) Thermal strain | (2) Observation of weld zone | (3) Metal structure of steel sheet (martensite area ratio of 70% or more) | (4) Measurement of hardness | | | (5) Bending crash test |
|---|---|---|---|---|---|---|---|---|
| | | | | | Lowest hardness (Hv) | Lowest hardness position | Hardness of heat affected zone (Hv300 or higher) | |
| 1 | With built-up portion | OK | OK | OK | 481 | B | OK | OK |
| 2 | With built-up portion | OK | OK | OK | 497 | B | OK | OK |
| 3 | With built-up portion | OK | OK | OK | 369 | B | OK | OK |
| 4 | With built-up portion | OK | OK | OK | 483 | B | OK | OK |
| 5 | With built-up portion | OK | OK | OK | 477 | B | OK | OK |
| 6 | With built-up portion | OK | OK | OK | 475 | B | OK | OK |
| 7 | With built-up portion | OK | OK | OK | 471 | B | OK | OK |
| 8 | With built-up portion | OK | OK | OK | 484 | B | OK | OK |
| 9 | With built-up portion | OK | OK | OK | 484 | B | OK | OK |
| 10 | With built-up portion | OK | OK | OK | 398 | B | OK | OK |
| 11 | With built-up portion | OK | OK | OK | 501 | B | OK | OK |
| 12 | With built-up portion | OK | OK | OK | 401 | B | OK | OK |
| 13 | With built-up portion | OK | OK | OK | 510 | B | OK | OK |
| 14 | With built-up portion | OK | OK | OK | 369 | B | OK | OK |
| 15 | With built-up portion | OK | OK | OK | 511 | B | OK | OK |
| 16 | With built-up portion | OK | OK | OK | 388 | B | OK | OK |
| 17 | With built-up portion | OK | OK | OK | 485 | B | OK | OK |
| 101 | Without built-up portion | OK | - | NG | 281 | C | (Without heat affected zone) | - |
| 102 | Without built-up portion | OK | - | OK | 382 | C | (Without heat affected zone) | - |
| 103 | With built-up portion | OK | OK | NG | 250 | B | NG | NG |

(continued)

| Sample No. | Presence or absence of built-up portion | (1) Thermal strain | (2) Observation of weld zone | (3) Metal structure of steel sheet (martensite area ratio of 70% or more) | (4) Measurement of hardness | | | (5) Bending crash test |
|---|---|---|---|---|---|---|---|---|
| | | | | | Lowest hardness (Hv) | Lowest hardness position | Hardness of heat affected zone (Hv300 or higher) | |
| 104 | With built-up portion | NG | OK | OK | 245 | B | NG | NG |
| 105 | With built-up portion | OK | OK | OK | 279 | C | OK | OK |
| 107 | With built-up portion | NG | OK | OK | 305 | A | OK | OK |
| 108 | With built-up portion | NG | OK | OK | 324 | A | OK | OK |
| 109 | With built-up portion | NG | OK | OK | 346 | A | OK | OK |
| 110 | With built-up portion | NG | OK | OK | 348 | A | OK | OK |
| 111 | With built-up portion | NG | OK | OK | 322 | A | OK | OK |
| 112 | With built-up portion | OK | NG | OK | 374 | B | OK | - |
| 113 | With built-up portion | OK | NG | OK | 400 | B | OK | - |
| 114 | With built-up portion | OK | NG | OK | 375 | B | OK | - |
| 115 | With built-up portion | OK | NG | OK | 382 | B | OK | - |
| 201 | With built-up portion | OK | OK | NG | 178 | C | OK | OK |
| 202 | With built-up portion | OK | OK | NG | 320 | C | OK | OK |
| 203 | With built-up portion | OK | OK | NG | 345 | C | OK | OK |
| 205 | With built-up portion | OK | OK | NG | 326 | C | OK | OK |
| 206 | With built-up portion | OK | OK | NG | 344 | C | OK | OK |

EP 3 521 458 B1

24

The results of Table 4 will be considered.

Samples Nos. 1 to 17, 105 and 107 to 115 are Examples satisfying all of the composition, the metal structure and the manufacturing conditions of the steel sheet according to the embodiment of the present invention. Therefore, the strength of the heat affected zone could be set at Hv300 or higher. In these samples, no crack occurred in the bending crash test. Regarding samples Nos. 112 to 115, since the composition of the built-up portion deviated from preferable range, cracks occurred at weld zone. It is impossible to distinguish cracks in weld zone from cracks in the bending crash test, so that the bending crash test was not performed with respect to samples Nos. 112 to 115.

Regarding samples Nos. 107 to 111, the composition of the built-up portion (i.e., welding wire) deviated from preferable range. Sample No. 107 was deficient in C, sample No. 108 was deficient in Si, sample No. 109 was deficient in Mn, sample No. 110 was deficient in Cr, and sample No. 111 was deficient in Mo. As a result, it was impossible to offset from the amount of heat shrinkage because of deficiency of the amount of volume expansion during the formation of martensite, thus generating thermal strain in the built-up steel sheet before subjecting to the heat treatment. As mentioned above, this thermal strain can be eliminated by subjecting the built-up steel sheet to a heat treatment (hot forming).

Samples Nos. 101 and 102 are samples of a steel sheet provided with no built-up portion. Regarding sample No. 101, the area ratio of martensite in the steel sheet was less than 70% since the heat treatment was not performed. Regarding sample No. 102, the area ratio of martensite in the steel sheet exceeded 70% since the heat treatment was performed under appropriate conditions. It has been found that the area ratio of martensite in the steel sheet can be set at 70% or more by satisfying the heat treatment condition of the present application.

Regarding sample No. 103, the heat treatment was not performed. Therefore, the heat affected zone was not heat-treated, leading to the lowered hardness of the heat affected zone. The area ratio of martensite in the steel sheet was less than 70%.

Regarding sample No. 104, the heat treatment of the steel sheet was performed before the formation of the built-up portion, and the heat treatment of the steel sheet was not performed after the formation of the built-up portion. Therefore, the heat affected zone was not heat-treated, leading to the lowered hardness of the heat affected zone. The amount of C in the composition of the built-up portion (i.e., welding wire) was less than preferable range. As a result, it was impossible to offset from the amount of heat shrinkage because of deficiency of the amount of volume expansion during the formation of martensite, thus generating thermal strain in the built-up steel sheet before the heat treatment.

Regarding samples Nos. 201 to 206, the composition of the steel sheet deviated from the range of the present application. Therefore, the area ratio of martensite in the steel sheet was less than 70%.

This application claims priority based on Japanese Patent Application No. 2016-194638 filed on September 30, 2016.

10:    Steel part
20:    Steel sheet
30:    Built-up portion
40:    Heat affected zone

**Claims**

1.  A method for producing a steel part, which comprises the steps of:

    preparing a built-up steel sheet comprising a steel sheet comprising:

        C: 0.15 to 0.5% by mass,
        Si: 0.10 to 3% by mass,
        Mn: 0.5 to 5% by mass,
        P: 0.05% by mass or less (excluding 0%),
        S: 0.05% by mass or less (excluding 0%),
        Al: 0.01 to 1% by mass,
        B: 0.0002 to 0.01% by mass,
        Ti: 0.005 to (3.4[N] + 0.1) % by mass (in which [N] represents a content of N (% by mass)), and
        N: 0.001 to 0.01% by mass, and optionally

    any one or more of:

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and
(d) 0.01 % by mass or less (excluding 0%) in total of one or more of Mg, Ca and REM,

with the balance being iron and inevitable impurities, and one or more built-up portions provided on the steel sheet;
hot-forming the built-up steel sheet at a temperature of an Ac3 point or higher of the steel sheet; and
cooling the hot-formed built-up steel sheet to a temperature of an Ms point or lower of the steel sheet such that an area ratio of martensite in a metal structure of the steel sheet is 70% or more,
wherein the step of preparing a built-up steel sheet comprises:

preparing the steel sheet, and
welding a welding wire on the steel sheet to form the built-up portions, and

wherein the welding wire comprises:

C: 0.10 to 1.00% by mass,
Si: 0.2 to 1.20% by mass,
Mn: 1.0 to 20.0% by mass,
Cr: 1.0 to 30.0% by mass, and
Mo: 0.30 to 1.00% by mass, and optionally

any one or more of:

Ni: 3.00% by mass or less (excluding 0%),
Ti: 0.20% by mass or less (excluding 0%),
Cu: 0.50% by mass or less (excluding 0%),
S: 0.020% by mass or less (excluding 0%),
Co: 1.00% by mass or less (excluding 0%),
V: 1.00% by mass or less (excluding 0%),
W: 2.00% by mass or less (excluding 0%), and
B: 0.020% by mass or less (excluding 0%),

with the balance being iron and inevitable impurities.

2. The method for producing a steel part according to claim 1, wherein the C content, the Mn content and the Cr content of the welding wire are respectively as follows:

C: 0.10 to 0.50% by mass,
Mn: 1.0 to 5.0% by mass, and
Cr: 1.0 to 5.0% by mass.

3. A steel part comprising:

a steel sheet;
one or more built-up portions provided on the steel sheet; and
a heat affected zone provided between the built-up portions and the steel sheet;
wherein the steel sheet has the composition comprising:

C: 0.15 to 0.5% by mass,
Si: 0.10 to 3% by mass,
Mn: 0.5 to 5% by mass,
P: 0.05% by mass or less (excluding 0%),
S: 0.05% by mass or less (excluding 0%),
Al: 0.01 to 1% by mass,
B: 0.0002 to 0.01% by mass,
Ti: 0.005 to (3.4[N] + 0.1) % by mass (in which [N] represents a content of N (% by mass)), and
N: 0.001 to 0.01% by mass, and optionally

any one or more of:

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and
(d) 0.01 % by mass or less (excluding 0%) in total of one or more of Mg, Ca and REM,

with the balance being iron and inevitable purities,
the steel sheet has a metal structure in which martensite has an area ratio of 70% or more, and
a heat affected zone has a hardness of Hv300 or higher.

4. The steel part according to claim 3, wherein the built-up portions have a hardness of Hv300 or higher.

5. The steel part according to claim 3 or 4, wherein the built-up portions comprise:

C: 0.10 to 1.00% by mass,
Si: 0.2 to 1.20% by mass,
Mn: 1.0 to 20.0% by mass,
Cr: 1.0 to 30.0% by mass, and
Mo: 0.30 to 1.00% by mass, and optionally
any one or more of:

Ni: 3.00% by mass or less (excluding 0%),
Ti: 0.20% by mass or less (excluding 0%),
Cu: 0.50% by mass or less (excluding 0%),
S: 0.020% by mass or less (excluding 0%),
Co: 1.00% by mass or less (excluding 0%),
V: 1.00% by mass or less (excluding 0%),
W: 2.00% by mass or less (excluding 0%), and
B: 0.020% by mass or less (excluding 0%)
with the balance being iron and inevitable impurities.

6. The steel part according to claim 5, wherein the C content, the Mn content and the Cr content of the built-up portions are respectively as follows:

C: 0.10 to 0.50% by mass,
Mn: 1.0 to 5.0% by mass, and
Cr: 1.0 to 5.0% by mass.

7. A built-up steel sheet used in the method for producing a steel part according to claim 1, comprising:

a steel sheet comprising:

C: 0.15 to 0.5% by mass,
Si: 0.10 to 3% by mass,
Mn: 0.5 to 5% by mass,
P: 0.05% by mass or less (excluding 0%),
S: 0.05% by mass or less (excluding 0%),
Al: 0.01 to 1% by mass,
B: 0.0002 to 0.01% by mass,
Ti: 0.005 to (3.4[N] + 0.1) % by mass (in which [N] represents a content of N (% by mass)), and
N: 0.001 to 0.01% by mass, and optionally

any one or more of:

(a) 0.1% by mass or less (excluding 0%) in total of one or more of V, Nb and Zr,
(b) 0.01 to 2% by mass in total of Cr and/or Mo,
(c) 0.01 to 0.5% by mass in total of Ni and/or Cu, and

(d) 0.01% by mass or less (excluding 0%) in total of one or more of Mg, Ca and REM, with the balance being iron and inevitable impurities;

one or more built-up portions provided on the steel sheet; and
a heat affected zone provided between the built-up portions and the steel sheet;
wherein the heat affected zone has a hardness of lower than Hv300.

**Patentansprüche**

1. Verfahren zur Herstellung eines Stahlteils, welches die Schritte umfasst:

   Herstellen eines aufgebauten Stahlblechs, umfassend ein Stahlblech, umfassend:

   C: 0,15 bis 0,5 Masse-%,
   Si: 0,10 bis 3 Masse-%,
   Mn: 0,5 to 5 Masse-%,
   P: 0,05 Masse-% oder weniger (ausgeschlossen 0%),
   S: 0,05 Masse-% oder weniger (ausgeschlossen 0%),
   Al: 0,01 bis 1 Masse-%,
   B: 0,0002 bis 0.01 Masse-%,
   Ti: 0,005 bis (3,4[N] + 0,1) Masse-% (worin [N] einen Anteil an N (Masse-%) darstellt), und
   N: 0,001 bis 0,01 Masse-%, und gegebenenfalls

   eines oder mehrere von:

   (a) 0,1 Masse-% oder weniger (ausgeschlossen 0%) im Gesamten von einem oder mehreren von V, Nb und Zr,
   (b) 0,01 bis 2 Masse-% im Gesamten von Cr und/oder Mo,
   (c) 0,01 bis 0,5 Masse-% im Gesamten an Ni und/oder Cu, und
   (d) 0,01 Masse-% oder weniger (ausgeschlossen 0%) im Gesamten von einem oder mehreren von Mg, Ca und REM,

   wobei der Rest Eisen und unvermeidbare Verunreinigungen sind,
   und ein oder mehrere Aufbauteile, angeordnet auf dem Stahlblech;
   Warmformen des aufgebauten Stahlblechs bei einer Temperatur von einem Ac3 Punkt oder höher des Stahlblechs; und
   Abkühlen des warmgeformten aufgebauten Stahlblechs auf eine Temperatur eines Ms Punkts oder niedriger des Stahlblechs derart, dass ein Flächenverhältnis von Martensit in einer Metallstruktur des Stahlblechts 70% oder mehr beträgt,
   wobei der Schritt des Herstellens eines aufgebauten Stahlblechs umfasst:

   Herstellen des Stahlblechs, und
   Schweißen eines Schweißdrahts auf das Stahlblech unter Bildung der Aufbauabschnitte, und

   wobei der Schweißdraht umfasst:

   C: 0,10 bis 1,00 Masse-%,
   Si: 0,2 bis 1,20 Masse-%,
   Mn: 1,0 bis 20,0 Masse-%,
   Cr: 1,0 bis 30,0 Masse-%, und
   Mo: 0,30 bis 1,00 Masse-%, und gegebenenfalls

   eines oder mehrere von:

   Ni: 3,00 Masse-% oder weniger (ausgeschlossen 0%),
   Ti: 0,20 Masse-% oder weniger (ausgeschlossen 0%),
   Cu: 0,50 Masse-% oder weniger (ausgeschlossen 0%),

S: 0,020 Masse-% oder weniger (ausgeschlossen 0%),
Co: 1,00 Masse-% oder weniger (ausgeschlossen 0%),
V: 1,00 Masse-% oder weniger (ausgeschlossen 0%),
W: 2,00 Masse-% oder weniger (ausgeschlossen 0%), und
B: 0,020 Masse-% oder weniger (ausgeschlossen 0%),

wobei der Rest Eisen und unvermeidbare Verunreinigungen sind.

2. Verfahren zur Herstellung eines Stahlteils gemäß Anspruch 1, wobei der C-Anteil, der Mn-Anteil und der Cr-Anteil des Schweißdrahts wie folgt sind:

C: 0,10 bis 0,50 Masse-%,
Mn: 1,0 bis 5,0 Masse-%, und
Cr: 1,0 bis 5,0 Masse-%.

3. Stahlteil, umfassend:

ein Stahlblech;
ein oder mehrere Aufbauabschnitte, angeordnet auf dem Stahlblech; und
eine wärmebeeinflusste Zone, angeordnet zwischen den Aufbauabschnitten und dem Stahlblech;
wobei das Stahlblech die Zusammensetzung aufweist, umfassend:

C: 0,15 bis 0,5 Masse-%,
Si: 0,10 bis 3 Masse-%,
Mn: 0,5 bis 5 Masse-%,
P: 0,05 Masse-% oder weniger (ausgeschlossen 0%),
S: 0,05 Masse-% oder weniger (ausgeschlossen 0%),
Al: 0,01 bis 1 Masse-%,
B: 0,0002 bis 0,01 Masse-%,
Ti: 0,005 bis (3,4[N] + 0,1) Masse-% (worin [N] einen Anteil an N (Masse-%) darstellt), und
N: 0,001 bis 0,01 Masse-%, und gegebenenfalls

eines oder mehrere von:

(a) 0,1 Masse-% oder weniger (ausgeschlossen 0%) im Gesamten von einem oder mehreren von V, Nb und Zr,
(b) 0,01 bis 2 Masse-% im Gesamten von Cr und/oder Mo,
(c) 0,01 bis 0,5 Masse-% im Gesamten an Ni und/oder Cu, und
(d) 0,01 Masse-% oder weniger (ausgeschlossen 0%) im Gesamten von einem oder mehreren von Mg, Ca und REM,

wobei der Rest Eisen und unvermeidbare Verunreinigungen sind,
wobei das Stahlblech eine Metallstruktur aufweist, worin Martinsit ein Flächenverhältnis von 70% oder mehr aufweist, und
eine wärmebeeinflusste Zone eine Härte von Hv300 oder höher aufweist.

4. Stahlteil gemäß Anspruch 3, wobei die Aufbauabschnitte eine Härte von Hv300 oder höher aufweisen.

5. Stahlteil gemäß Anspruch 3 oder 4, wobei die Aufbauabschnitte umfassen:

C: 0,10 bis 1,00 Masse-%,
Si: 0,2 bis 1,20 Masse-%,
Mn: 1,0 bis 20,0 Masse-%,
Cr: 1,0 bis 30,0 Masse-%, und
Mo: 0,30 bis 1,00 Masse-%, und gegebenenfalls
eines oder mehrere von:

Ni: 3,00 Masse-% oder weniger (ausgeschlossen 0%),

Ti: 0,20 Masse-% oder weniger (ausgeschlossen 0%),
Cu: 0,50 Masse-% oder weniger (ausgeschlossen 0%),
S: 0,020 Masse-% oder weniger (ausgeschlossen 0%),
Co: 1,00 Masse-% oder weniger (ausgeschlossen 0%),
V: 1,00 Masse-% oder weniger (ausgeschlossen 0%),
W: 2,00 Masse-% oder weniger (ausgeschlossen 0%), und
B: 0,020 Masse-% oder weniger (ausgeschlossen 0%),

wobei der Rest Eisen und unvermeidbare Verunreinigungen sind.

6. Stahlteil gemäß Anspruch 5, wobei der C-Anteil, der Mn-Anteil und der Cr-Anteil der Aufbauabschnitte wie folgt sind:

C: 0,10 bis 0,50 Masse-%,
Mn: 1,0 bis 5,0 Masse-%, und
Cr: 1,0 bis 5,0 Masse-%.

7. Aufgebautes Stahlblech, verwendet in dem Verfahren zur Herstellung eines Stahlteils gemäß Anspruch 1, umfassend:

ein Stahlblech, umfassend:

C: 0,15 bis 0,5 Masse-%,
Si: 0,10 bis 3% Masse-%,
Mn: 0,5 bis 5 Masse-%,
P: 0,05 Masse-% oder weniger (ausgeschlossen 0%),
S: 0,05 Masse-% oder weniger (ausgeschlossen 0%),
Al: 0,01 bis1 Masse-%,
B: 0,0002 bis 0,01 Masse-%,
Ti: 0,005 bis (3,4[N] + 0,1) Masse-% (worin [N] einen Anteil an N (Masse-%) darstellt), und
N: 0,001 bis 0,01 Masse-%, und gegebenenfalls

eines oder mehrere von:

(a) 0,1 Masse-% oder weniger (ausgeschlossen 0%) im Gesamten von einem oder mehreren von V, Nb und Zr,
(b) 0,01 bis 2 Masse-% im Gesamten von Cr und/oder Mo,
(c) 0,01 bis 0.5 Masse-% im Gesamten an Ni und/oder Cu, und
(d) 0,01 Masse-% oder weniger (ausgeschlossen 0%) im Gesamten von einem oder mehreren von Mg, Ca und REM, wobei der Rest Eisen und unvermeidbare Verunreinigungen sind;

ein oder mehrere Aufbauabschnitte, angeordnet auf dem Stahlblech; und
eine wärmebeeinflusste Zone, angeordnet zwischen den Aufbauabschnitten und dem Stahlblech;
wobei die wärmebeeinflusste Zone eine Härte von weniger als Hv300 aufweist.

**Revendications**

1. Procédé de production d'une pièce en acier, lequel comprend les étapes de :

préparation d'une tôle d'acier composée comprenant une tôle d'acier qui comprend :

du C: de 0,15 à 0,5% en masse,
du Si: de 0,10 à 3% en masse,
du Mn: de 0,5 à 5% en masse,
du P: 0,05% en masse ou moins (sauf 0%),
du S: 0,05% en masse ou moins (sauf 0%),
de l'Al : de 0,01 à 1% en masse,
du B: de 0,0002 à 0,01% en masse,

du Ti: de 0,005 à (3,4[N] + 0,1) % en masse (dans lequel [N] représente la teneur en N (% en masse)), et
du N: de 0,001 à 0,01% en masse, et optionnellement
l'une ou plusieurs quelconques parmi :

(a) 0,1% en masse ou moins (sauf 0%) pour un total d'un ou plus des V, Nb et Zr,
(b) de 0,01 à 2% en masse pour un total des Cr et/ou Mo,
(c) de 0,01 à 0,5% en masse pour un total des Ni et/ou Cu, et
(d) 0,01% en masse ou moins (sauf 0%) pour un total d'un ou plus des Mg, Ca et des métaux terre rare,

le reste étant du fer et des impuretés inévitables et une ou plusieurs parties composées présentes sur la tôle d'acier ;
formage à chaud de la tôle d'acier composée à une température d'un point Ac3 ou supérieur de la tôle d'acier ; et
refroidissement de la tôle d'acier composée formée à chaud à une température d'un point Ms ou inférieur de la tôle d'acier de sorte qu'un rapport de surface de la martensite dans une structure métallique de la tôle d'acier fait 70% ou plus,

dans lequel l'étape de préparation de la tôle d'acier composée comprend :

la préparation de la tôle d'acier, et
le soudage d'un fil de soudage sur la tôle d'acier pour former les parties composées,

et dans lequel le fil de soudage comprend :

du C: de 0,10 à 1,00% en masse,
du Si: de 0,2 à 1,20% en masse,
du Mn: de 1,0 à 20,0% en masse,
du Cr : de 1,0 à 30,0% en masse; et
du Mo : de 0,30 à 1,00% en masse, et optionnellement

l'une ou plusieurs quelconques parmi :

du Ni : 3,00% en masse ou moins (sauf 0%),
du Ti : 0,20% en masse ou moins (sauf 0%),
du Cu : 0,50% en masse ou moins (sauf 0%),
du S : 0,020% en masse ou moins (sauf 0%),
du Co : 1,00% en masse ou moins (sauf 0%),
du V : 1,00% en masse ou moins (sauf 0%),
du W : 2,00% en masse ou moins (sauf 0%) et
du B : 0,020% en masse ou moins (sauf 0%),
le reste étant du fer et des impuretés inévitables.

2. Procédé de production d'une pièce en acier selon la revendication 1, dans lequel la teneur en C, la teneur en Mn et la teneur en Cr du fil de soudage sont respectivement les suivantes :

C: de 0,10 à 0,50% en masse,
Mn: de 1,0 à 5,0% en masse; et
Cr : de 1,0 à 5,0% en masse.

3. Pièce en acier comprenant :

une tôle d'acier ;
une ou plusieurs parties composées mises à disposition sur la tôle d'acier ; et
une zone affectée par la chaleur mise à disposition entre les parties composées et la tôle d'acier ;
dans laquelle la tôle d'acier présente une composition comprenant :

du C: de 0,15 à 0,5% en masse,
du Si: de 0,10 à 3% en masse,

du Mn: de 0,5 à 5% en masse,

du P: 0,05% en masse ou moins (sauf 0%),

du S: 0,05% en masse ou moins (sauf 0%),

de l'Al : de 0,01 à 1% en masse,

du B: de 0,0002 à 0,01% en masse,

du Ti: de 0,005 à (3,4[N] + 0,1) % en masse (dans lequel [N] représente la teneur en N (% en masse)), et

du N: de 0,001 à 0,01% en masse, et optionnellement

l'une ou plusieurs quelconques parmi :

(a) 0,1% en masse ou moins (sauf 0%) pour un total d'un ou plus des V, Nb et Zr,

(b) de 0,01 à 2% en masse pour un total des Cr et/ou Mo,

(c) de 0,01 à 0,5% en masse pour un total des Ni et/ou Cu, et

(d) 0,01% en masse ou moins (sauf 0%) pour un total d'un ou plus des Mg, Ca et des métaux terre rare,

le reste étant du fer et des impuretés inévitables,

la tôle d'acier présente une structure métallique dans laquelle la martensite a un rapport de surface de 70% ou plus, et

une zone affectée par la chaleur présente une dureté de Hv300 ou plus.

4. Pièce en acier selon la revendication 3, dans laquelle les parties composées ont une dureté de Hv300 ou plus.

5. Pièce en acier selon la revendication 3 ou 4, dans laquelle les parties composées comprennent :

du C: de 0,10 à 1,00% en masse,

du Si: de 0,2 à 1,20% en masse,

du Mn: de 1,0 à 20,0% en masse,

du Cr : de 1,0 à 30,0% en masse; et

du Mo : de 0,30 à 1,00% en masse, et optionnellement

l'une ou plusieurs quelconques parmi :

du Ni : 3,00% en masse ou moins (sauf 0%),

du Ti : 0,20% en masse ou moins (sauf 0%),

du Cu : 0,50% en masse ou moins (sauf 0%),

du S 0,020% en masse ou moins (sauf 0%),

du Co : 1,00% en masse ou moins (sauf 0%),

du V : 1,00% en masse ou moins (sauf 0%),

du W : 2,00% en masse ou moins (sauf 0%), et

du B: 0,020% en masse ou moins (sauf 0%),

le reste étant du Fe et des impuretés inévitables.

6. Pièce en acier selon la revendication 5, dans laquelle la teneur en C, la teneur en Mn et la teneur en Cr des parties composées sont respectivement les suivantes :

C: 0,10 à 0,50% en masse,

Mn: de 1,0 à 5,0% en masse; et

Cr : de 1,0 à 5,0% en masse.

7. Tôle en acier composée utilisée dans le procédé de production d'une pièce en acier selon la revendication 1, comprenant :

une tôle d'acier comprenant :

du C: de 0,15 à 0,5% en masse,

du Si: de 0,10 à 3% en masse,

du Mn: de 0,5 à 5% en masse,

du P: 0,05% en masse ou moins (sauf 0%),

du S: 0,05% en masse ou moins (sauf 0%),
de l'Al : de 0,01 à 1% en masse,
du B: de 0,0002 à 0,01% en masse,
du Ti: de 0,005 à (3,4[N] + 0,1) % en masse (dans lequel [N] représente la teneur en N (% en masse)), et
du N: de 0,001 à 0,01% en masse, et optionnellement

l'un ou plusieurs quelconques des suivants :

(a) 0,1% en masse ou moins (sauf 0%) pour un total d'un ou plus des V, Nb et Zr,
(b) de 0,01 à 2% en masse pour un total des Cr et/ou Mo,
(c) de 0,01 à 0,5% en masse pour un total des Ni et/ou Cu, et
(d) 0,01% en masse ou moins (sauf 0%) pour un total d'un ou plusieurs parmi les Mg, Ca et des métaux terre rare, le reste étant du fer et des impuretés inévitables ;

une ou plusieurs parties composées mises à disposition sur la tôle d'acier ; et
une zone affectée par la chaleur mise à disposition entre les parties composées et la tôle d'acier ;
dans laquelle la zone affectée par la chaleur présente une dureté inférieure à Hv300.

[FIG. 1]

[FIG. 2A]

100

←100mm→

400mm

C —↑—·—·—
—·—·—↑— C

200A

30 { 31
      32

Y
Z⊙→X

[FIG. 2B]

400

100

90

h2

h1

100b
200A  32

Z
X⊙→Y

[FIG. 3A]

<u>C-C</u>

<u>100</u>

[FIG. 3B]

[FIG. 4A]

[FIG. 4B]

[FIG. 4C]

**EP 3 521 458 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5002880 B
- JP 2004276031 A
- EP 2617509 A1
- EP 2824204 A1
- WO 2017103127 A1
- JP 2016194638 A